(19) Europäisches Patentamt

**European Patent Office**

**Office européen des brevets**

(11) Numéro de publication: **0 285 956 B1**

# FASCICULE DE BREVET EUROPEEN

(45) Date de publication de fascicule du brevet: **14.10.92**  (51) Int. Cl.⁵: **G07B** **17/02**, G06F 15/21

(21) Numéro de dépôt: **88104985.2**

(22) Date de dépôt: **28.03.88**

(54) **Machine à affranchir à gestion de traces périodiques.**

(30) Priorité: **31.03.87 FR 8704479**

(43) Date de publication de la demande:
**12.10.88 Bulletin  88/41**

(45) Mention de la délivrance du brevet:
**14.10.92 Bulletin  92/42**

(84) Etats contractants désignés:
**DE FR GB**

(56) Documents cités:
**EP-A- 0 172 573      EP-A- 0 172 574
DE-A- 3 517 087      GB-A- 2 032 224
GB-A- 2 057 169      US-A- 4 319 328
US-A- 4 511 793**

(73) Titulaire: **ALCATEL SATMAM
113 rue Jean-Marin Naudin
F-92220 Bagneux(FR)**

(72) Inventeur: **Vermesse, Bernard
2 avenue du Général de Gaulle
F-94240 l'Haye les Roses(FR)**

(74) Mandataire: **Weinmiller, Jürgen et al
Lennéstrasse 9 Postfach 24
W-8133 Feldafing(DE)**

## Description

La présente invention concerne les machines à affranchir en particulier pour permettre une gestion dans le temps de l'état machine de chacune d'elles. Elle porte sur les machines exploitées en post-paiement ou sur les machines exploitées en pré-paiement pour assurer cette gestion de manière dite périodique, en relation avec des événements définis (cf. p. ex. EP-A-0 172 573).

Dans les machines à affranchir exploitées en post-paiement, il est connu que l'Administration des postes, ou l'un de ses services en charge d'un parc de machines à affranchir, exige de la part de chaque usager la remise chaque mois de relevés quotidiens de l'état du compteur ascendant de la machine. Ce compteur ascendant donne la valeur globale des affranchissements réalisés par la machine, au fur et à mesure des affranchissements.

Ces relevés font l'objet de l'établissement d'une fiche, dite en France "fiche mensuelle de dépôt". La fiche est remplie quotidiennement.

Elle est utilisée à des fins de facturation.

Sur cette fiche, l'usager reporte manuellement, en fin de journée :
- l'état du compteur ascendant de la machine,
- la consommation journalière de la machine, obtenue en faisant la différence entre l'état qu'il vient de reporter et celui qu'il a reporté la veille.

A échéance fixe, aux jours fériés près, l'usager fait parvenir la fiche remplie au service d'attache de sa machine.

Outre ces données, d'autres informations sont inscrites sur la fiche par l'usager. Ce sont :
- la raison sociale et l'adresse de l'usager,
- l'index à la fin de l'échéance précédente,
- la date de l'échéance en cours,
- le numéro de la machine,
- la consommation pour la période en cours, par exemple la consommation mensuelle donnée par la somme des consommations journalières figurant sur la fiche.

L'usager doit également réaliser dans le coin supérieur droit de la fiche, une empreinte à zéro, ou affranchissement de valeur nulle, permettant à l'Administration des postes de vérifier la qualité de l'empreinte.

La fiche est avantageusement numérotée. Elle est extraite d'un carnet, dans lequel les fiches ont chacune un double pour l'usager.

Ces fiches, qui permettent de facturer à chaque usager la valeur des affranchissements réalisés pendant la période concernée, permettent aussi de surveiller la cohérence de la consommation à partir des relevés quotidiens, donc de détecter des tentatives de fraude, et le cas échéant d'établir un compromis portant sur le montant probable des consommations à facturer.

Cette procédure d'élaboration de fiches est lourde de contraintes pour l'usager qui en assure la tenue et pour le service postal qui les exploite. En outre, ces fiches peuvent être mal remplies, être illisibles ou incomplètes ou entachées d'erreurs. Elles nécessitent l'intervention d'un agent du service postal pour redresser les oublis ou erreurs, avec le cas échéant, déplacement de l'agent chez l'usager pour vérifier et compléter les informations qui ont été portées sur la fiche. Ces contrôles et le redressement des erreurs entraînent un retard à la facturation.

Outre ces inconvénients liés à la qualité apparente de la fiche remplie, le service postal doit assurer la saisie des informations portées sur les fiches et établir les factures correspondantes ; il assure un nouveau contrôle à ce stade, en vérifiant l'existence d'une certaine cohérence entre les consommations à facturer et les précédentes facturées.

Tout nouveau problème apparaissant alors nécessite également une intervention d'agent du service postal chez l'usager et entraîne un retard supplémentaire de facturation.

Outre les retards à la facturation, de telles interventions exigent que le service postal dispose d'un personel important affecté aux opératons de contrôle et de rectification.

Pour les machine à affranchir fonctionnant en pré-paiement, classiquement, on prévoit que les machines se bloquent lorsque la valeur de l'affranchissement à réaliser dépasse le montant du crédit qui reste disponible dans la machine concernée.

L'usager doit donc de temps en temps réapprovisionner en crédit la machine, en fonction de son utilisation.

Dans les machines à pré-paiment, une comptabilisation de la valeur globale des affranchissements réalisés, de la valeur globale des crédits chargés, de la valeur du solde restant disponible et en général, du nombre d'articles affranchis est assurée pour permettre des contrôles d'exploitation de chaque machine. La valeur du solde de crédit, comparée à la valeur de l'affranchissement à réaliser permet, le cas échéant, le blocage de la machine. Cette comptabilisation permet aussi des contrôles d'exploitation correcte de la machine, effectués par le service postal. Les valeurs comptabilisées sont vérifées, en général lors d'un rechargement de crédit. Elle peuvent l'être également lors d'une demande espresse et/ou d'une intervention du service postal chez l'usager.

Ces contrôles sont basés sur une cohérence entre la valeur globale des crédits chargés successivement dans la machine, enregistrée par le compteur totalisateur et la valeur globale des affranchissements réalisés, à l'état du compteur descendant près qui correspond à la différence entre les états des deux compteurs totalisateur et ascendant. Ils sont effectués à partir des états de ces compteurs transmis au service postal à chaque chargement de crédit, même quand ces chargements de crédit sont réalisés directement par l'usager. On prévoit donc que les moyens de chargement de crédit restent sous le contrôle du service postal.

Ainsi, ces moyens de rechargement de crédit peuvent utiliser une liaison téléphonique entre l'usager et un centre de traitement du service postal. Une procédure particulière d'échange entre l'usager et le centre de traitement est mise en oeuvre, au cours de laquelle les états des compteurs sont transmis vers le centre, ainsi que le montant du nouveau crédit à charger, et y sont enregistrés tandis que l'autorisation de chargement de ce montant de crédit dans la machine est donnée à l'usager.

Ces moyens peuvent en variante utiliser une carte de chargement de crédit incorporant tout au moins une mémoire. La carte est alternativement placée dans des terminaux d'écriture-lecture du centre de traitement et de la machine à affranchir. Elle assure l'inscription irréversible notamment de directives par le centre de traitement, telles qu'un rechargement d'un montant défini de crédit, et des états de la machine concernée par cette machine. Elle permet la lecture par la machine des informations issues du centre et par le centre de celles issues de la machine.

Les contrôles d'exploitation de la machine effectués par le service postal sont alors réalisés au centre de traitement sur les données qui lui ont été transmises.

En cas d'anomalies d'exploitation détectées ou de panne de la machine, il y a intervention d'un agent du service postal chez l'usager.

Ces contrôles ne demeurent cependant pas totalement satisfaisants pour éviter d'éventuelles tentatives de fraude portant sur le montant de crédit réellement chargé dans la machine par l'usager. L'établissement de compromis entre le service postal et l'usager reste difficile à établir de manière satisfaisante.

La présente invention a pour but de réaliser une machine à affranchir permettant d'accroître la sécurité et de retrouver un état antérieur sûr à tout moment et permettant, en conséquence, d'établir de manière automatique les fiches mensuelles de dépôt exigées pour les machines en post-paiement ou d'effectuer des vérifications ou contrôles sur les opérations de chargement de crédits réellement effectuées par l'usager à un moment quelconque différé par rapport au chargement lui-même.

Elle a donc pour objet une machine à affranchir à gestion de traces, comportant un microprocesseur et, reliés audit microprocesseur, une tête d'impression de timbres, un clavier à touches, une horloge calendrier, une mémoire de commande, une mémoire de travail, au moins une première mémoire non volatile dite mémoire de l'état de la machine qui enregistre l'état des compteurs de la machine pour le dernier affranchissement réalisé, et une deuxième mémoire non volatile, dite mémoire de traces, présentant au moins un premier espace mémoire organisé en une pluralité de compartiments identiques adressables individuellement par des premiers moyens de commande de gestion en chargement de chaque premier espace mémoire, déclenchés à des intervalles de temps propres audit premier espace mémoire, pour l'enregistrement dans les différents compartiments de données relatives à l'état de la machine aux instants concernés, ladite machine étant caractérisée en ce qu'elle comporte, en outre, des seconds moyens de commande de consultation de chaque premier espace mémoire, commandant l'adressage de ses compartiments pour la lecture de la trace enregistrée dans celui des compartiments adressé dit compartiment consulté, et en ce que lesdits seconds moyens de commande comportent une mémoire de texte appartenant à ladite mémoire de commande et contenant, d'une part un premier message, accessible par une touche menu dudit clavier et définissant une suite d'opérations particulières de la machine découpées en une suite de premiers d'écrans visualisables en au moins une ligne de plusieurs caractères alphanumériques sur un afficheur alphanumérique relié au microprocesseur, avec au moins l'un desdits premiers écrans affecté à une opération dite de consultation de traces de l'état de la machine sélectionnable par une touche numérique dudit clavier qu'il désigne, et contenant d'autre part, pour l'opération de consultation de traces, un deuxième message constitué d'une suite de seconds écrans visualisables successivement sur l'afficheur lors de la sélection de l'opération de consultation, avec lesdits seconds écrans affichant, pour certains d'entre eux, la trace enregistrée dans le compartiment consulté et définissant, pour d'autres, des propositions de modification du compartiment consulté chacune sélectionnable par une touche spécifique désignée

EP 0 285 956 B1

avec la proposition concernée lors de son affichage.

Selon une autre caractéristique, ladite machine à affranchir est caractérisée en ce qu'elle comporte, en outre, une imprimante alphanumérique couplée audit microprocesseur et en ce que l'un desdits deuxièmes écrans comporte une proposition d'impression de la trace du compartiment consulté, sélectionnable par une touche numérique affectée à cette opération d'impression et désignée avec elle, commandant lorsque ladite proposition est sélectionnée ladite imprimante pour l'impression d'une fiche.

La machine a affranchir selon l'inventon permet donc, en fonctionnement en post-paiement, l'enregistrement des données nécessaires à l'établissement des fiches de relevés, en particulier, et en fonctionnement en pré-paiement, l'enregistrement des données relatives aux crédits successifs, en particulier, pour leur saisie à volonté, par une opération simple de consultation présentant une garantie de prélèvement sûr et fiable avec une possible impression automatique.

Les caractéristiqus et les avantages de la présente invention apparaîtront au cours de la description d'un exemple de réalisation donné dans les dessins ci-annexés. Dans ces dessins :

- La figure 1 est un schéma synoptique illustant une machine à affranchir selon l'invention ;
- La figure 2 illustre un afficheur et un clavier rentrant dans le schéma synoptique de la figure 1 ;
- La figure 3 représente une des mémoires dite mémoire de l'état de la machine à affranchir et de la trace immédiate ;
- La figure 4 représente une autre des mémoires, dite mémoire des traces de l'état de la machine à affranchir;
- La figure 5 est un organigramme de gestion de la l'état de la machine et de sa trace immédiate dans la mémoire de la figure 3 ;
- La figure 6 est un organigramme de gestion de la trace de la machine, dans la mémoire de la figure 4 ;
- La figure 7 illustre le contenu d'une autre mémoire dite mémoire de texte de la machine, pour une consultation de la mémoire de la figure 4 ;
- Les figure 8 et 9 sont les organigrammes d'un programme de consultation de la mémoire de la figure 4 ;
- La figure 10 est un organigramme d'un programme de consultation de la mémoire de la figure 3.

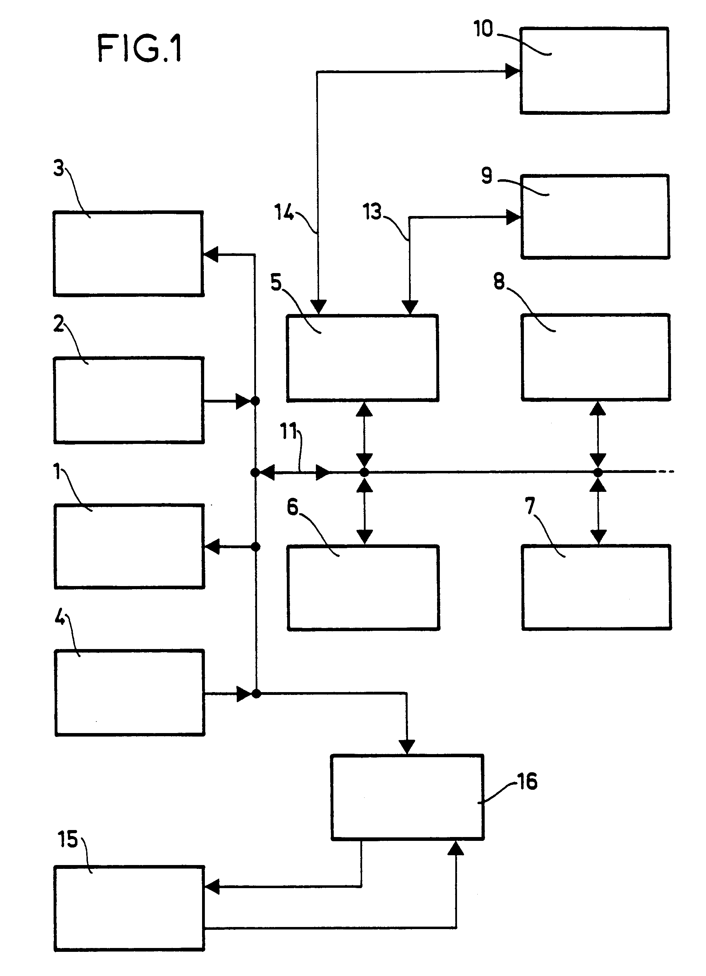

Dans la figure 1, qui représente le schéma synoptique d'une machine à affranchir selon l'invention, on voit que la machine comporte :

- une tête d'imression 1 assurant l'impression des timbres d'affranchissement à la valeur convenable sur le courrier, avec ou sans flamme publicitaire ;
- un clavier 2, assurant notamment la commande de la tête d'impression pour la sélection du montant de l'affranchissement à réaliser ;
- un afficheur 3 visualisant des informations utiles pour l'usager ;
- une horloge/calendrier 4 élaborant les indications de date, sous forme de données relatives à l'heure, la minute et la seconde, le jour, le mois et l'année ;
- un microprocesseur 5, formant la logique électronique de commande de la machine et gérant les échanges d'informations entre les circuits de la machine ;
- une ou des mémoires de commande constituant une mémoire de programme 6 et une mémoire de texte 7 illustrées séparément ;
- une ou des mémoires de travail constitutant une mémoire de travail, proprement dite, 8, une mémoire 9 de l'état de la machine et une mémoire 10 dite de traces de l'état de la machine.

Les circuit ou dispositifs 1 à 4 et les mémoires 6, 7 et 8 sont reliés au microprocesseur 5 par un bus bidirectionnel 11, les mémoires des états et des traces sont également reliées au microprocesseur, mais avantageusement par un bus directionnel spécifique 13 ou 14, selon la mémoire 9 ou 10 concernée, qui est distinct du bus 11.

La machine à affranchir comporte, en outre, ainsi que montré dans la figure 1, une imprimante alphanumérique 15 couplée au bus 11 par un circuit d'interface 16.

Dans cette figure 1, les mémoires 9 et 10 ont été illustrées distinctes l'une de l'autre et de la mémoire de travail 8 pour des facilités de compréhension, compte tenu de leur fonction spécifique.

En pratique, ces deux mémoires 9 et 10 peuvent être contenues dans la même mémoire, ou être séparées différemment ou encore être au moins partiellement contenues dans la mémoire de travail 8.

Dans la figure 1 également, on n'a fait apparaître qu'une seule mémoire 9 affectée à l'enregistrement de l'état de la machine. En pratique, cette mémoire 9 est doublée par une autre mémoire, qui lui est identique, chargée par les mêmes données mais à l'aide d'un bus distinct du bus 13, pour des raisons de sécurité bien connues.

La mémoire de travail 8 est une mémoire RAM (Random Acess Memory, en terminologie anglo-

4

saxonne) recevant et élaborant des données de commande sous le contrôle du micropresseur 5 et des mémoires 6 et 7.

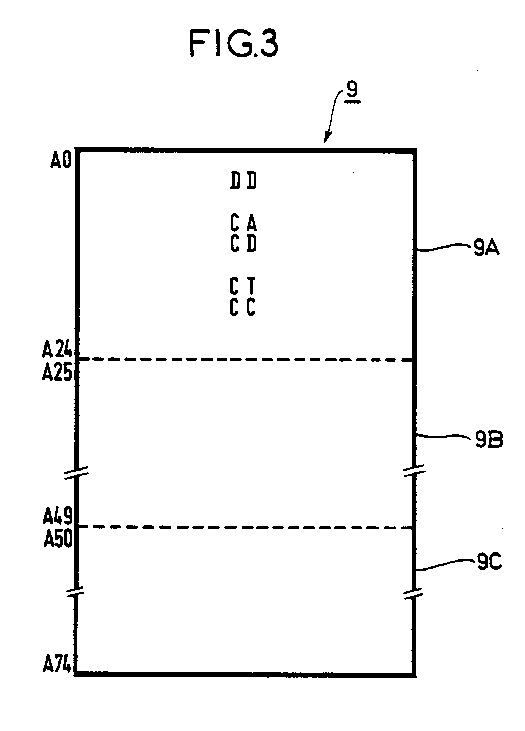

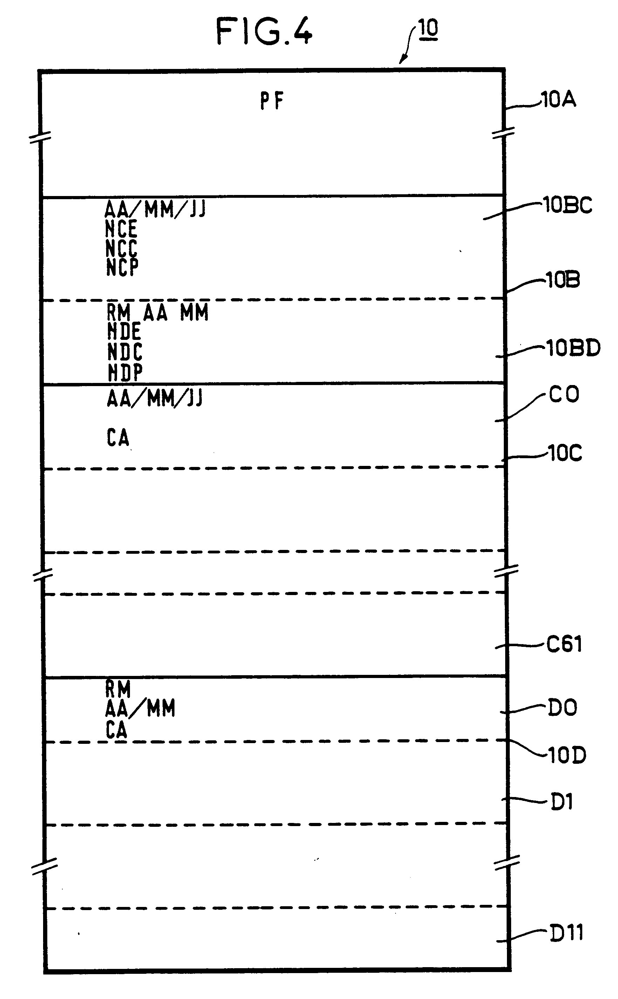

La mémoire de l'état de la machine 9 et la mémoire de traces 10 sont des mémoires non volatiles, ce sont des mémoires RAM secourues par pile ou des mémoires EEPROM (Electrically Erasable Programmable Read Only Memory). Elles sont précisées ci-après en regard de la figure 3 pour la mémoire 9 et de la figure 4 pour la mémoire 10.

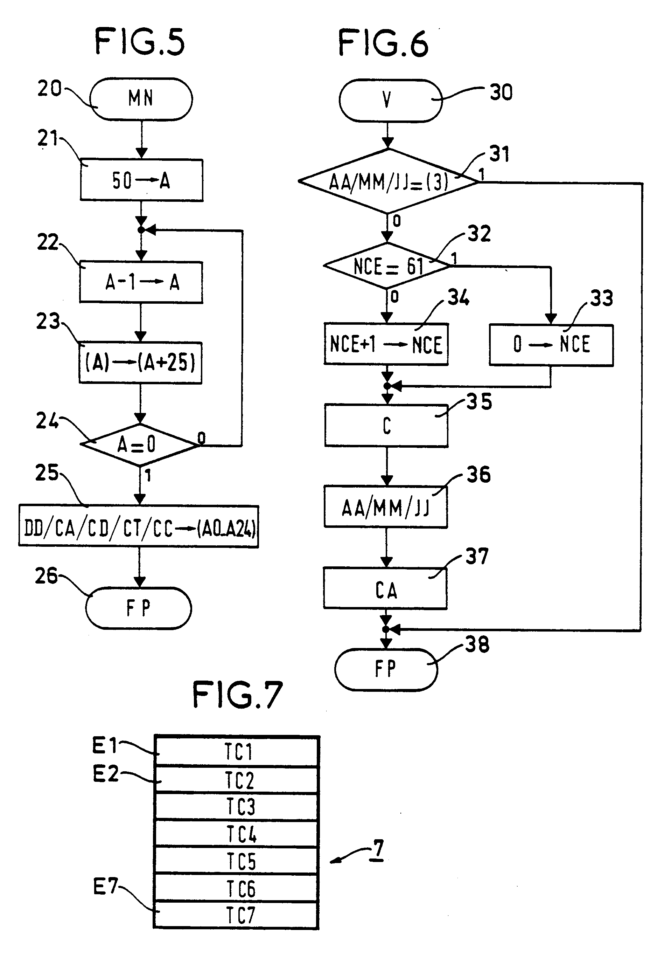

La mémoire de programme 6 et la mémoire de texte 7 sont des mémoires ROM (Read Only Memory) de commande. Les mémoires 7 et 8 seront précisées ci-après, par la définition de leur contenu en ce qui concerne la présente invention, faite en regard des figures 5, 6, 7, 8, 9 et 10.

L'imprimante alphanumerique 15 est raccordée à un connecteur du circuit d'interface 16. Cette imprimante est par exemple une imprimante telle que celle CITIZEN de type IDP-56ORS. Elle a deux modes d'impression, l'un graphique et l'autre alphanumérique. En mode alphanumérique elle permet d'imprimer une ligne de 40 caractères consécutifs. En mode graphique elle permet d'imprimer, avantageusement comme il ressortira de la suite de la description, des données codées, sous forme de codes à barres en particulier.

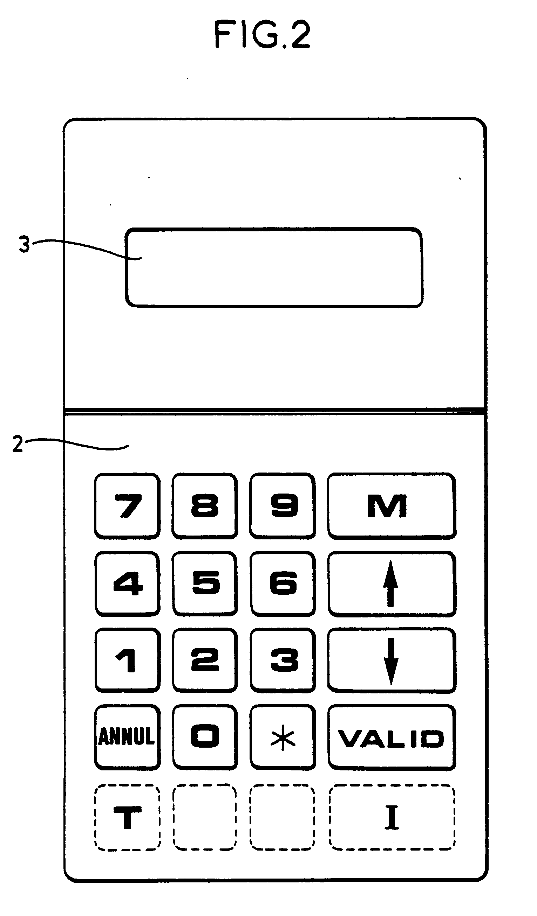

Le clavier 2 et l'afficheur 3 sont décrits en regard de la figure 2 qui les représente comme un ensemble clavier-afficheur.

Le clavier 2 comporte 16 touches et peut en comporter quatre autres supplémentaires montrées en pointillés, sous les 16 touches précédentes, l'afficheur 3 est du type alphanumérique.

L'afficheur alphanumérique permet de visualiser une ou plusieurs lignes de 16, 20, 40 caractères alphanumériques chacune. Il peut, par exemple, être l'un de ceux commercialiés par la société EPSON ou DENSITRON CORPORATION, qui permettent de visualier tous les caractères figurant dans le code ASCII (code n° 5 du CCITT).

Il permet de faire apparaître en clair des messages et permet à l'opérateur de sélectionner l'une des propositions contenues dans le message affiché, avec pour chacune de ces propositions possibles le numéro de la touche du clavier qui permet sa sélection. Grâce de ces messages l'opérateur est constamment guidé.

Dans la description qui va suivre, l'afficheur permet de visualiser à chaque instant deux lignes de 16 caractères alphanumériques. Les messages sont alors formés d'écrans, utilisant chacun la pleine capacité de l'afficheur, soit 32 caractères pour cet exemple, qui apparaissent chacun pendant un certain temps sur l'afficheur et défilent à la suite les uns des autres. Le temps d'apparition de chaque écran dépend de l'importance qualitative de la proposition définie ; il peut être selon les écrans, de 1, 2 ou 3 secondes. Ce temps est fixé par un programme. A la fin du temps d'apparition du dernier écran d'un message, le premier écran du même message apparaît à nouveau. La suite des écrans de chaque message est bouclée, le défilement des écrans est automatique et se répète jusqu'à intervention de l'opérateur par le clavier.

Le clavier 2 a seize touches, non référencées individuellement car marquées, qui se composent de :

. dix touches numériques marquées 0,1, ...9, qui permettent à l'opérateur, d'une part, de composer une valeur, par exemple la valeur du timbre de l'affranchissement à réaliser et d'autre part, de sélectionner l'une des propositions contenues dans le message affiché, définie avec le numéro de sa touche de sélection,

- une touche marquée ANNUL qui permet d'annuler l'action ou proposition en cours ou permet de ramener la machine dans son état initial qui est celui de composition de la valeur du timbre de l'affranchissement à réaliser,

- une touche marquée VALID qui permet de valider un choix ou une valeur du timbre composée par l'opérateur,

- une touche étoile marqué * qui lorsqu'elle est utilisée simultanément avec la touche VALID permet de valider un ordre de changement de fonction de la machine,

- une touche menu marquée M qui donne accès à un premier message définissant des opérations particulières possibles ou propositions principales spécifiques du menu,

- deux touches de défilement l'une marquée ↓ et l'autre ↑ qui permettent de suspendre le défilement automatique des écrans ou de les faire defiler au rythme voulu par l'opérateur, dans leur ordre normal ou dans l'ordre inverse.

Le clavier 2 peut comporter, en outre, quatre touches supplémentaires montrées en pointillés dans la figure 2, sous les seize touches. Ces touches supplémentaires peuvent être affectées à des fonctions différentes de la machine. Deux de ces quatre touches supplémentaires ont seulement été identifiées, ce sont :

- une touche marquée T qui permet à l'opérateur de mettre la machine en mode de consultation de traces enregistrées dans la machine,

- une touche marquée I qui permet à l'opérateur de mettre la machine en mode d'impression, par l'imprimante 15. Une telle impression, pour l'établissement de fiches de relevés est l'une des opérations particulières de la machine ou l'une des étapes d'une opération particulière possible.

Pour chaque fonction de la machine, affranchissement ou opérations particulières, seules les touches utiles en regard des propositons du message en cours d'affichagge sont alors actives.

Une action sur les autres touches est sans effet. La touche ANNUL est seule constamment active. Des témoins lumineux non représentés associés aux différentes touches peuvent permettre de signaler les seules touches actives, pour assister l'opérateur.

La figure 3 illustre la mémoire 9 de l'état de la machine, qui est en outre agencée en mémoire de la trace immédiate de l'état de la machine pour les deux affranchissements précédents réalisés. Elle enregistre dans un espace mémoire 9A qui leur est affecté, en particulier, le compteur ascendant CA, le compteur descendant CD, le compteur totalisateur CT et le compteur d'articles ou de cycles d'affranchissements CC de la machine. Ces compteurs définissent, pour le compteur ascendant, la valeur globale des affranchissements réalisés, pour le compteur descendant la valeur du crédit restant disponible, pour le compteur totalisateur, la valeur globale des crédits chargés et pour le compteur de cycles, le nombre d'affranchissements réalisés. Les états de ces compteurs donnent l'état de la machine à chaque affranchissement. Ils sont enregistrés l'un après l'autre, en 5 octets pour chacun des compteurs ascendant CA, descendant CD et totalisateur CT et en 4 octets pour le compteur de cycles CC, précédés des données correspondantes de date, notées DD et définies en 6 octets pour l'année, le mois, le jour, l'heure, la minute et la seconde, dans l'espace mémoire 9A.

L'espace mémoire 9A est dit espace de l'état de la machine, il est dans l'exemple donné de 25 octets.

Cette même mémoire 9 comporte deux autres espaces mémoires 9B et 9C identiques à l'espace mémoire 9A ; ils sont affectés à l'enregistrement des deux états qui précédent directement celui actuel enregistré en 9A ; ces deux espaces mémoires 9B et 9C contiennent alors la trace immédiate de l'état de la machine pour les derniers affranchissements réalisés.

Cette mémoire 9 fonctionne en registre à décalage. A chaque affranchissement, ou éventuellement chargement de crédit, pour lequel il y a changement d'état de la machine, l'état de la machine accompagné des données de date est chargé dans l'espace mémoire 9A avec transfert préalable du contenu de l'espace mémoire 9B dans l'espace mémoire 9C et de l'espace mémoire 9A dans l'espace mémoire 9B.

En variante la mémoire 9 peut fonctionner en registre bouclé, les espaces mémoires 9A, 9B et 9C étant successivement chargés par l'état actuel de la machine, de sorte qu'à tout moment la mémoire 9 contient cet état actuel et les deux états immédiatement précédents. Elle peut aussi fonctionner en registre bouclé pour les espaces mémoires 9B et 9C et avoir son espace mémoire 9A indépendant du registre bouclé et demeurant fixe pour l'enregistrement de l'état actuel de la machine.

Bien entendu la mémoire 9 peut comporter un nombre plus important d'espaces mémoires affectés à l'enregistrement de la trace immédiate de l'état de la machine sur un plus grand nombre d'affranchissements. Ce nombre reste cependant limité à quelques unités.

Dans la figure 3, on a désigné par Ao à A24 les adresses des octets de l'espace mémoire 9A, A25 à A49 les adresses des octets de l'espace mémoire 9B et A50 à A74 celles des octets de l'espace mémoire 9C.

La mémoire de traces 10 est décrite en regard de la figure 4. On a considéré dans cet exemple, les cas où la mémoire 10 est conçue pour mémoriser les traces journalières de l'état du compteur ascendant de la machine ainsi que les traces mensuelles, dans le cadre d'une machine exploitée en post.paiement. On a également considéré regroupés dans cette mémoire 10, les paraamètres et variables précisés ci-après nécessaires à la gestion des traces, ceci sachant que toutefois tout ou partie de cette mémoire 10 peut être contenue dans la mémoire de travail 8.

La mémoire de traces 10 est organisée à cet effet en quatre espaces mémoires notés 10A, 10B, 10C et 10D. L'espace mémoire 10A est affecté à l'enregistrement de paramètres fixes propres à la machine et son usager. L'espace mémoire 10B est affecté à l'enregistrement de variables propres à la gestion des traces ou à leur consultation. L'espace mémoire 10C est affecté à l'enregistrement des traces journalières de l'état de la machine donné par le compteur ascendant. L'espace mémoire 10D est affecté à l'enregistrement de traces mensuelles de l'état de la machine.

Les traces journalières de l'état de la machine sont constituées par des données de date " AA,MM,JJ " et l'état concerné du compteur ascendant CA de la machine. Les traces mensuelles sont analogues, elles comportent, outre l'état de la machine qui est donné à l'échéance du mois, le numéro de la trace mensuelle concernée défini pour les différentes traces mensuelles selon l'ordre des enregistrements de ces traces.

Le premier espace mémoire 10A affecté aux paramètres propres à la machine et l'usager est chargé une fois pour toute, à la mise en service de la machine à affranchir effectuée par un opérateur.

A cette mise en service, l'opérateur assure une mise à l'heure de l'horloge/calendrier. Il introduit également dans la machine les paramètres propres à la machine et à l'usager, pour l'identification de la machine et son exploitation. Ces paramètres sont la raison sociale de l'usager, le numéro de la machine, les coordonnées tells que numéro du centre postal d'attache de la machine, en particulier, qui sont déjà chargées dans certaines machines connues. A ces paramètres, il ajoute des paramètres propres au mode d'exploitation spécifique à l'invention pour l'établissement de relevés, qui sont notamment le numéro de la première fiche de relevés à établir, le numéro du jour d'établissement de chaque fiche. L'ensemble de ces paramètres sont les données fixes, notées PF mémorisées dans le premier espace mémoire 10A. Ce premier espace mémoire 10A est prévu de 128 octets à leur effet. Après enregistrement, ces données sont vérifiées.

Lors de cette mise en service, l'opérateur réalise également les autres opérations normales, en particulier de mise à zéro des compteurs ou mémoire de l'état de la machine et des autres mémoires. La machine à affranchir alors plombée est opérationnelle.

L'espace mémoire 10C affecté aux traces journalières de l'état de la machine est organisé en 62 compartiments identiques Co à C61. Leur numéro dans leur ordre est traduit par C variable de 0 à 61. Chacun d'eux est de 8 octets, soit 3 octets pour les données de date traduisant l'année AA, le mois MM et je jour JJ et 5 octets pour l'état de la machine à cette date donné par son compteur ascendant CA. Ces compartiments permettent 62 enregistrements successifs, se faisant à l'intervalle du jour lors de la première mise sous tension de la journée, à la suite l'un de l'autre dans la suite des compartiments considérée en boucle fermée. Les contenus de ces compartiments donnent la trace de l'état de la machine à l'échéance du jour, pour au moins 2 mois d'utilisation de la machine.

L'espace mémoire 10D affecté aux traces mensuelles de l'état de la machine est organisé en 12 compartiments identiques entre eux notés D0 à D11. Chacun est de 8 octets se décomposant en 2 octets pour les donnés de date AA, MM, 5 octets pour l'état de la machine CA à cette date et 1 octet pour le rang RM de l'état concerné de la machine dans la suite que constituent ces enregistrements entre eux, dans le temps. Ces compartiments permettent 12 enregistrements successifs, se faisant à l'intervalle du mois, à la suite l'un de l'autre et en considérant les 12 compartiments en boucle fermée. Les contenus de ces compartiments donne la trace mensuelle de l'état de la machine sur 1 an d'utilisation de la machine.

L'espace mémoire 10B est affecté à l'enregistrement de variables propres à la gestion des traces journalières et mensuelles contenues en 10C et 10D et à leur consultation. Il est à cet effet organisé en deux zones 10BC et 10BD comparables, l'une pour l'espace mémoire 10C et l'autre pour l'espace mémoire 10D.

Les variables enregistrées dans la zone 10BC sont la date de la dernière écriture dans l'espace 10C, exprimée en 3 octets AA/MM/JJ, le numéro ou rang de 0 à 61 du compartiment concerné par la dernière écriture, exprimé en 1 octet noté NCE, le numéro ou rang du compartiment qui est consulté exprimé en 1 octet noté NCC et le numéro du compartiment qui précède celui consulté exprimé en 1 octet NCP.

Les variables enregistrées dans la zone 10BD sont analogues. Ce sont la date de la dernière écriture notée AA/MM, en 2 octets qui est précédée du rang RM de la dernière trace mensuelle enregistrée, le numéro du compartiement concerné par cette dernière écriture, celui du compartiment qui est consulté et celui du précédent, ces numéros de compartiments D variables de 0 à 11, sont exprimés en 1 octet chacun et notés NDE, NDC et NDP respectivement.

Cet espace mémoire 10B est un espace mémoire de travail directement lié à la gestion et la consultation des espaces 10C et 10D ; il leur a été associé de ce fait dans la figure 4. L'espace mémoire 10A est également un espace mémoire lié aux espaces 10C et 10D, il leur a été associé de ce fait.

En exploitation, l'usager peut utiliser la machine à affranchir pour des opérations normales d'affranchissement pour lesquelles elle reste principalement conçue mais également pour des opérations particulières et notamment, selon l'invention une opération de consultation de la mémoire de traces 10, de tout ou partie de son contenu ou une opération de consultation de la mémoire 9.

L'opération particulière de consultation peut être accessible par la touche supplémentaire T du clavier, affectée à cette fonction.

De préférence, l'opértaion particulière de consultation de la mémoire de traces 10 comme celle de consultation de la mémoire 9 appartient à un ensemble d'opérations particulières proposées par des messages du menu. Les opérations normales d'affranchissement sont également définies dans un ou plusieurs autres messages pour les différentes opérations d'affranchissement.

Comme dans la demande de brevet français n° 87 02 667 déposée au nom de la demanderesse, les différents messages sont contenus dans la mémoire de texte, ils sont découpés en un ou plusieurs écrans limités visualisables individuellement sur l'afficheur. Chaque écran limité est par exemple formé de deux lignes de 16 caractères chacune, pour un afficheur permettant de visualiser deux lignes de 16 caractères,

7

avec chacun des 32 caractères de l'écran enregistré dans un octet de la mémoire de texte. Le choix entre les messages successifs relatifs aux opérations normales d'affranchissement et ceux relatifs aux opérations particulières est réalisé par la touche menu. Cette touche menu donne accès aux différentes propositions des messages relatifs aux opérations particulières.

On rappelle brièvement comment est réalisé ce choix. Un message initial est systématiquement affiché sur l'écran à chaque mise sous tension de la machine, ou après vérification de la date de la première mise sous tension de la journée, ou encore par interruption expresse des opérations normales d'affranchissement faite par l'usager, par la touche annulation du clavier.

Le message initial définit l'option possible entre affranchissement ou opérations particulières. Il apparaît sur l'afficheur sous forme d'un écran ou de plusieurs écrans successifs. La touche menu donne accès aux opérations particulières.

La touche validation laisse la machine en fonctionnement pour les opérations normales d'affranchissement.

Le contenu de la mémoire de texte 7 et celui de la mémoire de programme 8 sont précisés ci-après, mais uniquement en ce qui concerne les opérations liées à la gestion et à la consultation des traces de l'état de la machine, qui appartiennent à la présente invention, en indiquant, le cas échéant leur sélection dans le messge qui les propose à l'usager puis en décrivant leur déroulement.

La figure 5 illustre l'organigramme de la gestion de la trace immédiate de l'état de la machine à affranchir dans la mémoire 9 de la figure 3.

Cette gestion est assurée par un programme contenu dans la mémoire de programme 6. Il est automatiquement déclenché à chaque affranchissement au cours de l'affichage d'un message MN qui appartient à l'ensemble des messages successifs relatifs aux opérations d'afferanchissement.

Ce message MN est constitué de deux écrans successivement affichés :

| | |
|---|---|
| **Ecran 1** | **Timbre = XXXX** |
| **Ecran 2** | **Affranchir** |
| | **ou Annuler** |

Dans ce message, la valeur du timbre, précédemment composée et validée, est affichée en clair. Seule la touche annulation du clavier est active, la non annulation vaut confirmatoin de l'affranchissement et déclenche le programme de gestion de la trace immédiate.

Le programme de gestion de la trace immédiate est déclenché, selon une étape initiale 20 notée MN dans la figure 5. Il est exécuté en utilisant 1 octet de la mémoire de travail 8 pour désigner les adresses A concernées de la mémoire 9. Les instructions successives de ce programme et leur déroulement sont :

Instruction 1 :

- mettre l'adresse désignée A de la mémoire 9 à 50, selon l'étape 21 notée 50→A

Instruction 2:

- décrémenter de 1 l'adresse A, selon une phase 22 notée A-1→A
- lire l'octet d'adresse A et le transférer à l'adresse A + 25, selon une phase 23 notée (A)→(A + 25)

Instruction 3

. comparer A à o, selon une phase 24 notée A = o et
    - si A = o, passer à l'instruction 4
    - si A est différent de o recommencer l'instruction 2.

Instruction 4 :

- prélever l'image de l'horloge calendrier donnant les données de date DD et les écrire aux adresses A = o à A = 5,
- prélever l'état du compteur ascendant CA aux adresses A = 6 à A = 10, ajouter la valeur du timbre et écrier l'état actuel résultant aux mêmes adresses A = 6 à A = 10,
- prélever l'état du compteur descendant CD aux adresses A = 11 à A = 15, retrancher la valeur du timbre et écrire le résultat aux mêmes adresses A = 11 à A = 15,
- prélever l'état du compteur totalisateur CT aux adresses A = 16 à A = 20, retrancher la valeur du timbre et réécrire le résultat aux mêmes adresses A = 16 à A = 20,
- prélever l'état du compteur de cycles aux adresses A = 21 à A = 24, l'incrémenter de 1 et le réécrire aux mêmes adresses A = 21 à A = 24. Une phase 25 notée DD, CA, CD, CT, CC→(Ao-A24) montre les actions de cette instruction 4.

Instruction 5 :

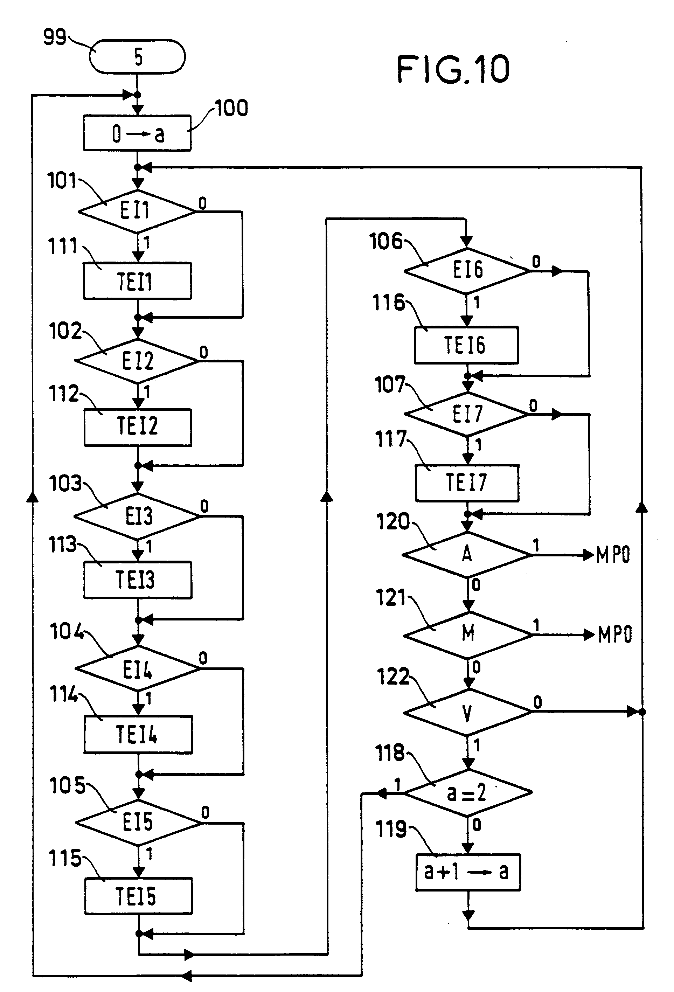

- commander la fin de programme FP, selon une phase 26.
En regard de l'organigramme de la figure 5 et des figures suivantes on précise également que l'acquisition des données de date DD à partir de l'horloge calendrier est réalisée par un programme spécifique également contenu dans la mémoire de programme 6. Ce programme d'acquisition de date, décrit dans la demande de brevet déjà citée, consiste pour le microprocesseur 5 à prélever les contenus des compteurs de l'horloge calendrier et à les écrire dans des octets affectés à cet effet de la mémoire de travail 8. Ils constituent dans la RAM l'image électronique de l'horloge calendrier, qui est recopiée dans la mémoire 9.
Dans la figure 5 et les figures suivantes, on précise également que les phases de décisions dans le déroulement du programme concerné sont schématisées par des losanges. Les sorties sur ces losanges sont notées 1 pour traduire oui et o et pour traduire non.
Cette gestion de la trace immédiate de l'état de la machine permet à la suite d'un défaut ou d'une panne, de retrouver un état antérieur sûr pour permettre un compromis entre le service postal et l'usager. Elle constitue un accroissement certain de sécurité d'exploitation. L'accès à la trace immédiate de l'état de la machine, qui concerne une mesure de sécurité, est décrit en dernier lieu en regard de la figure 10.
La figure 6 illustre l'organigramme de la gestion de la trace journalière de l'état de la machine à affranchir dans l'espace mémoire 10C de la mémoire 10. Cette gestion est assurée par un programme spécifique contenu dans la mémoire de programme 6.
Ce programme de gestion de trace journalière est déclenché automatiquement, à la première mise sous tension de la journée, pour une machine à affranchir non constamment sous tension. Ce déclenchement automatique a lieu au passage à une heure fixe définie, par exemple au passage à minuit de l'horloge-calendrier constaté par un changement de jour par le microprocesseur, pour une machine à affranchir en fonctionnement continu, constamment sous tension.
Le déclenchement de ce programme est indiqué par une étape initiale 30 notée V, donnée en regard d'une mise sous tension de la machine, pour laquelle il y a lieu de vérifier que cette mise sous tension est ou n'est pas la première de la journée.
Le déroulement de ce programme est excuté en utilisant les variables enregistrées dans l'espace mémoire 10B et en utilisant la mémoire de travail fonctionnant en pointeur d'adresses C pour désigner l'adresse du compartiment de l'espace mémoire 10C alors à écrire. Les instructions de ce programme et leur déroulement sont les suivants, en regard d'une organisation des 62 compartiments Co à C61 selon une suite en boucle fermée :

Instruction 1 :

- lire les 3 octets de date AA/MM/JJ de l'espace mémoire 10B et les comparer aux 3 octets correspondants de l'horloge calendrier 3, selon une phase 31 notée AA/MM/JJ = (3) et
  . s'ils sont égaux, passer à l'instruction 3 de fin de programme (phase 38), il n'y a pas changement de jour
  . s'ils sont différents, passer à l'instruction 2.

Instruction 2 :

- lire l'octet NCE désignant le numéro du dernier compartiment écrit, qui est enregistré dans l'espace mémoire 10B et le comparer à 61, selon une phase 32 notée NCE = 61.
  . si NCE = 61, faire NCE = o et l'enregistrer dans l'espace mémoire 10B selon une phase 33 notée o→NCE
  . si NCE est différent de 61, incrémenter NCE de 1 et charger la nouvelle valeur dans l'espace mémoire 10B, selon une phase 34 NCE + 1→NCE.

La nouvelle valeur de NCE désigne le numéro du compartiment qui va être écrit.

- désigner l'adresse C du compartiment NCE à écrire de la mémoire 10, selon une phase 35 notée C,
- transférer le contenu de l'horloge calendrier dans ce compartiment désigné et dans l'espace mémoire 10B selon une phase 36 notée AA/MM/JJ
- transférer le contenu du compteur ascendant CA dans ce même compartiment de l'espace mémoire 10C, aux adresses suivantes selon une phase 37 notée CA
- passer à l'instruction 3.

Instruction 3 :

- commander la fin de programme selon une phase 38 notée FP.

Ce programme de gestion de trace journalière permet donc d'inscrire, dans celui des compartiments désigné, la date du jour suivie de la recopie de l'état du compteur ascendant. Le jour suivant un enregistrement comparable est fait à la suite du précédent, et ainsi de suite. Lorsqu'un enregistrement est fait dans le dernier compartiment C61, l'enregistrement suivant est fait dans le premier compartiment Co, la suite des compartiments étant traitée en boucle fermée.

En variante, la gestion de la trace journalière peut être assurée en considérant les compartiments Co à C61 de l'espace mémoire 10C en registre à décalage ; cette gestion n'intervenant que peut fréquemment et avant les opérations d'affranchissements, elle laisse le temps nécessaire au transfert du contenu de chaque registre dans le suivant.

La gestion de la trace mensuelle dans l'espace mémoire 10D est analogue à la gestion de la trace journalière et est assurée par un programme spécifique. Elle est déclenchée à échéance fixe, du mois.

Dans ce dernier programme la variable NDE prend les valeurs possibles de 0 à 11 ; il comporte simplement par rapport au précédent, une étape supplémentaire relative au numéro RM enregistré avec la trace mensuelle, réalisée par incrément de +1 du numéro enregistré dans l'espace 10B. La gestion de l'espace mémoire 10D peut être également assurée en considérant ses compartiments comme un registre à décalage.

La gestion de la trace journalière, comme celle de la trace mensuelle, fait glisser la trace concernée, de sorte qu'on ne perd que le plus ancien des enregistrements.

Préalablement à la description de l'opération de consultation de la mémoire de traces 10, on précise que cette opération est accessible à partir d'un message MPO accessible par la touche menu du clavier et définissant les opérations particulières.

Ce message MPO est constitué d'écrans successifs visualisés sur l'afficheur. Ces écrans sont :

```
Ecran 1        Vous Voulez

Ecran 2        1 - les états

               Machine

Ecran 3        2 - Les compteurs

               Auxiliaires

Ecran 4        3 - Changer de

               fonctionnent

Ecran 5        4 - Changer de

               plafond

Ecran 6        5 - Les traces

               immédiates
```

```
Ecran 7          6 - Les traces

                   journalières

Ecran 8          7 - Les traces

                   mensuelles

Ecran 9          Faites votre

                   choix.
```

Les écrans 1 et 9 sont affichés pendant 1 seconde, les écrans 2 à 8 le sont chacun pendant 2 secondes. Un programme de temporsation corresondant au message MPO et contenu dans la mémoire de programme se déroule en correspondance pour faire apparaître chaque écran pendant le temps convenable voulu.

Les écrans 1 à 9 sont des écrans fixes, c'est-à-dire à texte invariable, enregistrés dans la mémoire de texte. Un programme afficheur crée dans la mémoire de travail une image électronique de chaque écran à afficher, sur 32 octets pour l'afficher en 2 lignes de 16 caractères.

L'écran 1 signale à l'usager les différentes opérations proposées, l'écran 9 invite l'usager à faire son choix.

Les écrans 2 à 8 définissent les opérations particulières, en associant à chacune d'elles une touche numérique particulière, pour leur sélection.

Lors de l'affichage des écrans du message MPO la touche annulation permet à l'usager s'il le désire de revenir au message initial pour lequel les opérations normales d'affranchissement ou les opérations particulières peuvent être choisies.

Ces opérations particulières sont définies ci-après, celle de consultation des traces est seule décrite :

- Les états de la machine : c'est l'opération qui permet d'avoir accès par la touche 1 du clavier à l'état actuel de la machine, pour l'affichage du contenu de l'un des compteurs ou de l'horloge calendrier enregistré.
- Les compteurs auxiliaires : c'est l'opération qui permet d'avoir accès par la touche 2 du clavier à l'un des compteurs numérotés existant dans la machine, qui sont affectés à des postes budgétaires donnés.
- Changer de fonctionnement : c'est l'opération qui donne accès par la touche 3, aux différents modes de fonctionnement possibles de la machine à affranchir pour les opérations normales d'affranchissement, qui sont le mode au coup par coup, selon lequel après chaque affranchissement la valeur du timbre composé est ramenée à zéro et il y a lieu de recomposer celui de l'affranchissement suivant, le mode en rafale, selon lequel la valeur du timbre est maintenue pour une suite illimitée d'affranchissements, et le mode en rafale limitée, selon lequel la valeur du timbre est maintenue pour un certain nombre d'affranchissements.
- changer de plafond : c'est l'opération qui donne par la touche 4 accès au plafond fixé donnant la valeur maximale d'un affranchissement qui peut être réalisé et permet à l'usager de la changer.
- les traces immédiates, journalières, mensuelles : ce sont les opérations qui donnent accès aux mémoires des traces 9 et 10 par les touches 5, 6 et 7, respectivement, pour une consultation de tout ou partie de leur contenu.

La figure 7 illustre le contenu de la mémoire de texte 7 en ce qui concerne le message MP1 de consultation des traces journalières de la mémoire 10 quand cette opération est sélectionnée. Il est constitué d'écrans successifs spécifiques à cette opération de consultation des traces de la mémoire 10. Ces écrans sont visualisés l'un après l'autre sur l'afficheur. Certains sont entièrement fixes, c'est-à-dire à texte invariable, d'autres sont en partie fixe et en partie variable comme il est précisé ci-après. Les textes définis par les écrans sont notés TC dans la figure 7 où ils sont accompagnés du numéro de l'écran E. Les écrans successifs du message MP1 de consultation des traces journalières sont :

| | | |
|---|---|---|
| Ecran 1 - E1 : | Enregistrement | - TC1 |
| | du JJ/MM/AA | |
| Ecran 2 - E2 : | Index | - TC2 |
| | = XXXXXXX | |
| Ecran 3 - E3 : | Consommation | - TC3 |
| | = XXXXX, XX FR | |
| Ecran 4 - E4 : | Vous voulez : | - TC4 |
| | 1 - Le suivant | |
| Ecran 5 -E5 : | 2 - Le précédent | -TC5 |
| | 3 - Le premier | |
| Ecran 6 -E6 : | 4 - Le dernier | -TC6 |
| | 5 - Imprimer | |
| Ecran 7 -E7 : | Faites | -TC7 |
| | Votre choix | |

Chaque écran occupe 32 octets, avec 1 octet par chaque caractère.

Les écrans 1, 2, 3 sont affichés chacun pendant 2 secondes, les écrans 4 à 7 le sont pendant 1 seconde. Un programme de temporsation contenu dans la mémoire de programme et qui se déroule en corresopndance donne ces temps d'affichage.

Les écrans 4 à 7 sont des écrans fixes, les écrans 4, 5 et 6 sont en outre des écrans de propositions, la sélection de l'une des propositions offertes est faite par la touche numérique associée à cette proposition concernée.

Les écrans 1 à 3 sont des écrans en partie fixe et en partie variable. La partie fixe de chacun d'eux est contenue dans la mémoire de texte. La partie variable est prélevée ou déduite de la mémoire de traces 10 et correspond, avant la sélection de l'une des propositons offertes, à l'enregistrement effectué par la machine, le jour de la consultation. Dans la mémoire de texte, les parties fixes tiennent compte de l'introduction des parties variables lors de l'affichage. Le programme afficheur de la mémoire de travail permet de créer dans la mémoire de travail l'image électronique, sur 32 octets, de l'écran à visualiser sur l'afficheur, en incorporant dans la partie fixe la partie variable.

La touche 1 du clavier provoque l'affichage de l'enregistrement suivant sauf si, au moment de l'action sur cette touche, l'enregistrement affiché était le dernier réalisé, soit le plus récent.

La touche 2 du clavier provoque l'affichage de l'enregistrement précédent sauf si, au moment de l'action sur cette touche, l'enregistrement affiché était le premier réalisé soit le plus ancien.

Les touches 3 et 4 du clavier permettent respectivement l'affichage de l'enregistrement le plus ancien et celui de l'enregistrement le plus récent.

La touche 5 du clavier provoque l'impression automatique d'une fiche mensuelle de dépôt ou d'un journal.

La touche annulation du clavier ramène le message MPO des opérations particulières.

Ces écrans successifs permettent la visualisation des traces sur l'afficheur et l'établissement de la fiche mensuelle de dépôt par simple consultation des traces journalières enregistrées dans compartiments de l'espace mémoire 10C.

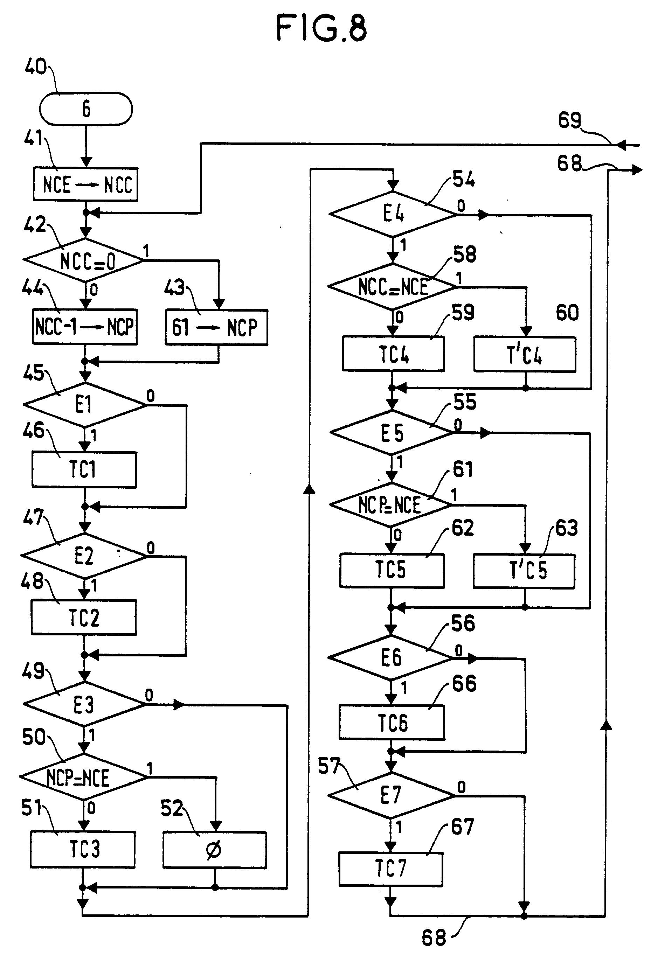

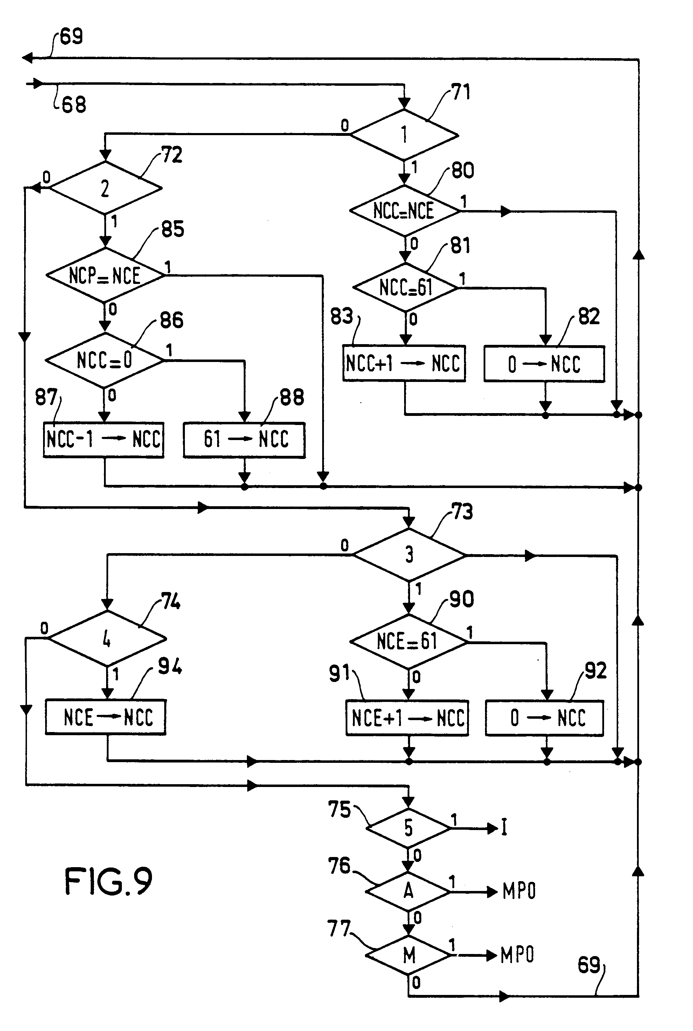

Les figures 8 et 9 illustrent l'organigramme du programme de consultation des traces journalières. Il est contenu dans la mémoire de programme 6 et associé à cette opération de consultation pour son déroulement. Il est déclenché par action sur la touche 6 lors de l'affichage des écrans du message MPO des opérations particulières, selon une phase initiale 40 notée 6. La figure 8 corresond à la partie du programme contrôlant les affichages, la figure 9 correspond à la partie du programme d'action sur les touches. Dans ces figures les phases de décision sont schématisées par des losanges. En sortie des losanges, le chiffre 1 signifie oui, le chiffre o signifie non.

Le programme des affichages (figure 8) se décompose en instructions suivantes :

Instruction 1 :

- lire dans l'espace mémoire 10BC le numéro NCE du dernier compartiment écrit, charger le numéro du compartiment à consulter NCC à l'emplacement qui lui est affecté dans l'espace 10BC de la mémoire 10, avec au départ NCC = NCE, selon une phase 41 notée NCE→NCC.
- comparer NCC à o, selon une phase 42, notée NCC = o, et
  - . si NCC = o, écrire 61 à l'emplacement de l'espace mémoire 10BC affecté à l'enregistrement du numéro NCP du compartiment précédent celui consulté, selon une phase 43 notée 61→NCP.
  - . si NCC est différent de o, écrire NCC-1 à l'emplacement de l'espace mémoire 10BC affecté à l'enregistrement du numéro NCP du compartiment précédent celui consulté, selon une phase 44 notée NCC-1→NCP
- passer à l'instruction 2.

Instruction 2 :

- composer les écrans 1, 2 et 3 successivement, selon des phases 45, 47 et 49 notées E1, E2 et E3, établir l'adresse du compartiment consulté, afficher ces écrans l'un après l'autre pendant 2 secondes et,
- quand l'écran 1 est présent, prélever le texte fixe de l'écran 1 dans la mémoire de texte, prélever la date AA/MM/JJ contenue dans le compartiment consulté NCC, créer l'image électronique de l'écran 1 et afficher l'image, selon une phase 46 notée TC1,
- quand l'écran E2 est présent, prélever le texte fixe de l'écran 1, prélever l'état du compteur ascendant enregistré dans le compartiment consulté, constituer l'image électronique de l'écran 2 et l'afficher, selon une phae 48 notée TC2 ; si l'état du compteur ascendant enregistré contient un ou des bits de redondance ou de détection d'erreur, ceux-ci sont supprimés et non affichés.
- quand l'écran E3 est présent :
  - . lire le numéro NCP du compartiment précédent celui consulté et comparer NCP au numéro du compartiment le plus récent, ce compartiment le plus récent étant le dernier écrit, selon une phase 50 notée NCP = NCE et
  - . si NCP n'est pas égal à NCE, prélever le texte fixe de l'écran 3, prélever l'état CA du compteur du compartiment consulté et celui du compartiment précédent, calculer la différence entre les états prélevés, constituer l'image électronique de l'écran 3 et l'afficher selon une phase 51 notée TC3.
  - . si NCP = NCE, effacer l'écran E3, selon la phase 52 notée ∅ , le signe ∅ traduisant que l'écran est vide.

Instruction 3 :

- composer les écrans 4, 5, 6 et 7 successivement selon des phase 54, 55, 56 et 57 notées E4, E5, E6 et E7, afficher ces écrans l'un après l'autre pendant une seconde, et
- quand l'écran 4 est présent :
  - . comparer les numéros du compartiment consulté et du dernier enregistré selon une phase 58 notée NCC = NCE et
  - . si NCC et NCE sont différents, prélever le texte fixe de cet écran pour l'afficher selon une phase 59 notée TC4,
  - . si NCC = NCE, prélever le texte fixe de cet écran E4, effacer la deuxième ligne, et afficher selon une phase 60 notée T′C4.
- quand l'écran 5 est présent :
  - . comparer les numéros NCP et NCE du compartiment précédent celui consulté et du dernier compartiment écrit, selon une phase 61 notée NCP = NCE et
  - . si NCP et NCE sont différents, prélever le texte fixe de cet écran pour l'afficher selon une phase 62 notée TC5
  - . si NCP = NCE, prélever le texte de cet écran, effacer la première ligne et afficher, selon une phase 63 notée T′C5.
- quand l'écran 6, ou 7, est présent, prélever le texte de l'écran concerné pour l'afficher selon les phases 66, 67 notées TC6, TC7.

13

Le déroulement de ce programme de consultation des traces journalières est bouclé sur lui-même à travers le programme d'action sur les touches dont l'organigramme est donné dans la figure 9. Sur ces organigrammes on a porté en conséquence les références 68 et 69 communes, traduisant l'insertion du programme d'action sur les touches dans le programme d'affichage de consultation. Le programme illustré dans la figure 9 contrôle les modifications résultant de l'action sur l'une des touches 1 à 4 du clavier, pour la modification du compartiment consulté NCC, sur la touche 5, pour l'impression automatique d'une fiche mensuelle de dépôt, sur la touche annulation simplement notée A ou sur la touche menu M.

Dans l'organigramme de la figure 9 on a montré par des phases 71, 72, 73, 74, 75, 76 et 77 l'actionement possible des touches 1 à 5, A, M. Une seule des touches peut être actionnée, ainsi qu'illustré par ces phases montrées chacune sur la sortie o de la phase qui la précède et qui traduit le non actionnement de cette touche.

Les instructions de ce sous programme sont :

- si la touche 1 est actionnée :
    . comparer le numéro du compartiment consulté et celui du dernier compartiment écrit, selon une phase 80 notée NCC = NCE et
    . si NCC = NCE commander le rebouclage direct en 69
    . si NCC et NCE sont différents, comparer NCC à 61, selon une phase 81 notée NCC = 61, et
    . si NCC = 61, mettre NCC à o selon une phase 82 notée o→NCC et reboucler en 69
    . si NCC est différents de 61, incrémenter NCC de 1, selon la phase 83 notée NCC + 1→NCC et reboucler, en 69
- si la touche 2 est actionnée :
    . comparer le numéro NCP du compartiment précédent celui consulté à celui du compartiment le plus récent NCE, selon une phase 85 notée NCP = NCE, (l'usager voulant visualiser le compartiment précédent sauf si ce dernier est le plus récent) et
    . si NCP = NCE commander le rebouclage direct, en 69
    . si NCP et NCE sont différents comparer NCC à o selon une phase 86 notée NCC = o et
    . si NCC est différent de o, décrémenter NCC de 1, selon une phase 87 notée NCC-1→NCC et reboucler
    . si NCC = o mettre NCC à 61, selon une phase 88 notée 61→NCC, et reboucler
- si la touche 3 est actionnée :
    . comparer NCE à 61 selon une phase 90 notée NCE = 61 et
    . si NCE est différent de 61, mettre NCC à NCE + 1 selon une phase 91 notée NCE + 1→NCC et reboucler
    . si NCE = 61, mettre NCC à o selon une phase 92 notée o→NCC et reboucler.

L'enregistrement le plus ancien va alors être visualisé
- si la touche 4 est actionnée :
    . mettre NCC à NCE, selon une phase 94 notée NCE→NCC; l'usager veut visualiser la trace journalière la plus récente.
- si la touche 5 est actionnée :
    . commander l'impression automatique I des données délivrées à l'imprimante alphanumérique, à partir du compartiment consulté jusqu'au plus récent.
- si la touche ANNUL notée A ou la touche menu M est actionnée :
    . annuler l'action en cours et ramener le message des opérations particulières MPO.

L'opération de consultation de la trace journalière, telle que décrite ci-avant, a été indiquée déclenchée par l'actionnement de la touche 6 du clavier, lors de l'affichage du message MPO des opérations particulières. En variante, elle peut l'être par la touche de fonction T du clavier. Dans ces conditions, dans la figure 8, la phase d'initialisation 40 notée 6 devient une phase d'initialisation déclenchée par la touche T.

L'opération de gestion de la trace mensuelle dans l'espace mémoire 10D, celle de consultation de cette trace mensuelle et les programmes pour leur déroulement sont analogues à ceux relatifs à la trace journalière et ne sont donc pas décrits.

L'opération d'impression d'une fiche mensuelle de dépôt, à partir de la trace journalière de l'état de la machine, qui peut être consultée, se fait automatiquement. Avant d'actionner la touche 5 du clavier donnant l'ordre d'imprimer, au cours de l'affichage du message MP1 de consultaton de la trace journalière, l'usager a fait apparaître sur l'afficheur le contenu du compartiment consulté qu'il veut voir figurer en premier sur la fiche. Ce programme n'est pas décrit dans le détail. Il est déclenché par la touche 5 précédente. Ses instructions et son déroulement sont les suivants :

Instruction 1 :

- prélever le numéro RM de la fiche précédente, enregistré dans le dernier compartiment écrit de l'espace mémoire 10D, l'incrémenter de + 1 puis de l'imprimer, c'est le numéro de la fiche à établir.

Instruction 2 :

- prélever la raison sociale et l'adresse de l'usager, ainsi que le numéro de la machine, définis dans les paramètres fixes PF enregistrés dans l'espace mémoire 10A, à la mise en service de la machine à affranchir, et les envoyer à l'imprimante.

Instruction 3

- Prélever la date, l'index et la consommation de la trace journalière du compartiment consulté, qui sont affichées, et les envoyer à l'imprimante alphanumérique pour leur impression surune ligne de la fiche, pour le jour concerné.

Instruction 4 :

- Si l'enregistrement qui vient d'être imprimé n'est pas le plus récent (celui correspondant au jour d'édition de la fiche), recommencer l'instruction 3, ceci simulant un appui sur la touche 1 désignée dans le message MP1,
- dans le cas contraire, passer à l'instruction 5.

Instruction 5 :

- calculer la somme des consommations journalières imprimées pour le mois concerné, et l'imprimer sur la fiche ; le microcalculateur calcule cette somme qu'il fournit à l'imprimante.

Instruction 6 :

- prélever le numéro du bureau d'attache, dans l'espace mémoire 10A où il est enregistré avec les paramètres fixes PF et l'imprimer.

De manière analogue à l'opération d'impression d'une fiche mensuelle de dépôt, l'usager peut commander l'impression d'un journal pour ses besoins propres. La sélection de l'opération d'impression, par la touche 5 du clavier lors de l'affichage du message de consultation des traces journalières peut offrir une proposition de choix entre impression de ladite fiche ou du journal. Le programme d'impression du journal est celui d'impression de ladite fiche, avec les instructions 1 et 6 en moins.

En outre, compte tenu des caractéristiques de l'imprimante, la fin d'impression en clair de la fiche mensuelle de dépôt, déclenche une impression sous forme codée tout au moins des données essentielles, déjà imprimées en clair sur la fiche. L'impression de ces données sous forme codée permet leur saisie directe et automatique ultérieure par le service postal.

Les données considérées sont par exemple imprimées sous forme de code à barres. La machine utilise à cet effet une technique de transcodage convenable connue, telle que celle du code "2 parmi 5" dit "entrelacé", selon laquelle les chiffres de rang impair sont représentés par 5 barres dont 3 sont minces et 2 d'épaisseur double, tandis que les chiffres de rang pair sont codés en modulant 5 espaces entre barres, 3 de ces espaces étant étroits et 2 de largeur double. Ces données considérées essentielles sont en particulier :
- le numéro de la fiche
- le numéro de la machine
- le numéro du bureau d'attache de la machine
- la dernière trace journalière de la fiche précédente
- la date du jour d'établissement de la présente fiche
- la consommation de ce mois.

Ces données imprimées en code barre permettent l'exploitation automatique directe de la fiche par le service postal.

Les données essentielles ou toutes les données déjà imprimées en clair sont en variante imprimées sour forme codée en utilisant d'autres techniques de codage, telles que celle des bandes connues sous la marque SOFTSTRIP de la société CAUZIN Systems Inc. sont alors directement imprimées sur la fiche.

L'opération d'impression d'une fiche mensuelle de dépôt est avantageusement signalée à l'usager par un message dans un écran automatiquement affiché à la première mise sous tension de la machine, le jour de l'échéance d'établissement de la fiche. Elle peut l'être également quelques jours avant l'échéance, pour prévenir l'usager.

Dans la machine à affranchir, la trace immédiate de l'état de la machine, gérée à chaque affranchissement réalisé par la machine, et la trace mensuelle de l'état de la machine, gérée à l'échéance fixe du mois, ne sont pas à priori imprimées. Elles constituent essentiellement un accroîssement de sécurité d'exploitation de la machine, pour l'usager comme pour le service postal.

L'opération d'impression telle que décrite ci-avant est déclenchée par l'actionnement de la touche 5 lors de l'affichage du message MP1. En variante elle peut l'être par la touche de fonction marquée I du clavier. Dans ces conditions, dans la figure 9, la phase 75 notée 5 devient une phase analogue de décision commandée par la touche I.

Bien entendu, en particulier pour les machines fonctionnant en pré-paiement la date journalière de l'état de la machine peut être enregistrée comme dans celles fonctionnant en post-paiement. De préférence, la trace journalière sera remplacée par la trace enregistrée aux chargements de crédit dans la machine, et portera non plus sur le compteur ascendant de la machine mais sur le compteur totalisateur des crédits chargés.

L'opération de consultation de la trace immédiate, et celle de consultation de la trace mensuelle sont accessibles comme toutes les opérations particulières de la machine par le menu. Ces deux opérations appartiennent au message MPO des opérations particulières et sont définies dans les écrans 6 et 8. Elles peuvent, en variante, appartenir à l'opération définie dans l'écran 2 du message MPO et dans ces conditions quand cette opération est sélectionnée être accessibles par des écrans individuels du message correspondant alors affiché.

La sélection de l'opération de consultation de la trace immédiate donne lieu à l'affichage d'un nouveau message MP2 composé d'écrans successifs suivants :

```
Ecran 1 :      Etat

               antérieur : - a

Ecran 2 :      le JJ/MM/AA

               à HH/MM/SS

Ecran 3 :      Ascendant

               = XXXXXXX,XX FR

ecran 4 :      Descendant

               = XXXXXX, XX FR

Ecran 5 :      Totalisateur

               = XXXXXXXX, XX FR

Ecran 6 :      Cycles

               = XXXXXXXXX

Ecran 7 :      Etat précédent.

               Valider
```

Dans l'écran 1, a est le rang de la trace immédiate de l'état de la machine, qui est concernée, a = o traduisant l'état actuel en 9A, a = 1 traduisant l'état directement antérieur en 9B a = 2 le précédent, en 9C.

Ces écrans sont mémorisés dans la mémoire de texte 7, pour leur partie fixe.

L'opération de consultation de la trace immédiate est exécutée par un programme de commande contenu dans la mémoire de programme. L'organigramme de consultation de la trace immédiate est illustré dans la figure 10, en utilisant 1 octet de la mémoire de travail désignant les adresses de lecture dans la mémoire 9.

Ce programme est déclenché par une phase initiale 99 notée 5 correspondant à l'actionnement de la touche 5 du clavier lorsque le message MPO est présent sur l'afficheur. Ses instructions et son déroulement sont les suivants :

Instruction 1 :

- mettre le rang a à o, selon une phase 100 notée o→a.

Instruction 2 :

- composer chacun des écrans 1, 2... 7 successivement selon des phases 101, 102... 107 notées EI1, EI2... EI7 pour les afficher l'un après l'autre et
  . quand l'écran 1 est présent, prélever le texte fixe de cet écran dans la mémoire de texte, composer son image électronique avec la valeur de a et l'afficher selon une phase 111 notée TEI1,
  . quand chacun des écrans 2 à 7 est présent, prélever le texte fixe et le cas échéant la partie variable correspondante, composer l'image électronique concernée et l'afficher selon des phases respectives 112 à 117 notées TEI2 à TEI7,

Instruction 3 :

- déclencher les actions qui résultent de l'actionnement, selon les phases 120, 121 et 122 des touches annulation notée A, menu notée M et validation notée V alors actives.
  . si la touche A ou la touche M est actionnée, retourner au message MPO, ce programme est terminé.
  . si la touche V est actionnée comparer a à 2 selon une phase 118 notée a = 2 et
  . si a = 2 réinitialiser ce programme,
  . si a n'est pas égal à 2, incrémenter a de + 1 selon la phase 119 notée a + 1→a et recommencer le programme pour la nouvelle valeur de a.

Au cours de cette opération, l'état actuel de la machine accompagnée de la date du dernier affranchissement réalisé est visualisé puis, si souhaité, à l'aide de la touche de validation, chacun des états successivement précédents jusqu'à la limite des enregistrements réalisés dans la mémoire 9.

Lorsque les compartiments de la trace journalière dans l'espace mémoire 10C sont traités lors de l'opération de gestion de la trace journalière comme un registre à décalage, leur consultation est faite de manière analogue à l'opération de consultation de la trace immédiate qui vient d'être décrite. Il en est de même pour les compartiments de la trace mensuelle de l'espace mémoire 10D.

**Revendications**

**1.** Machine à affranchir à gestion de traces, comportant un microprocesseur (5) et, reliés audit microprocesseur, une tête d'impression de timbres (1), un clavier (2) à touches, une horloge calendrier (4), une mémoire de commande (6, 7), une mémoire de travail (8), au moins une première mémoire non volatile (9A) dite mémoire de l'état de la machine qui enregistre l'état de compteur de la machine pour le dernier affranchissement réalisé, et une deuxième mémoire non volatile (10), dite mémoire de traces (10), présentant au moins un premier espace mémoire (10C, 10D) organisé en une pluralité de compartiments identiques (Co-C61, Do-D11) adressables individuellement par des premiers moyens de commande (6) de gestion en chargement de chaque premier espace mémoire, déclenchés à des intervalles de temps propres audit premier espace mémoire, pour l'enregistrement dans les différents compartiments de données relatives à l'état de la machine aux instants concernés, ladite machine étant caractérisée en ce qu'elle comporte, en outre, des seconds moyens de commande de consultation (10BC, 10BD, 6, 7) de chaque premier espace mémoire, commandant l'adressage de ses compartiments pour la lecture de la trace enregistrée dans celui des compartiments adressé dit compartiment consulté (NCC), et en ce que lesdits seconds moyens de commande comportent une mémoire de texte (7) appartenant à ladite mémoire de commande et contenant, d'une part un premier message (MPO), accessible par une touche menu (M) dudit clavier et définnisant une suite d'opérations particulières de la machine découpées en une suite de premiers d'écrans visualisables en au moins une ligne de plusieurs caractères alphanumériques sur un afficheur alphanumérique (3) relié au microprocesseur, avec au moins l'un desdits premiers écrans affecté à une opération dite de consultation de traces de l'état de la machine sélectionnable par une touche numérique dudit clavier qu'il désigne, et contenant d'autre part, pour l'opération de consultation de traces, un deuxième message (MP1) constitué d'une suite de seconds écrans (E1-E7) visualisables successivement sur l'afficheur lors de la sélection de l'opération de consultation, avec lesdits seconds écrans affichant, pour certains d'entre eux (E1-E3), la trace (TC1-TC3) enregistrée dans le compartiment consulté (NCC) et définissant, pour d'autres (E4-E6), des propositions (TC4-TC6) de modification du compartiment consulté (NCC) chacune sélectionnable par une touche spécifique (1-4) désignée avec la proposition concernée lors de son affichage.

2.  Machine à affranchir selon la revendication 1, caractérisé en ce que lesdits seconds moyens de commande comportent, en outre, une mémoire de programme (6) appartenant à ladite mémoire de commande et contenant un programme, dit de consultation des traces enregistrées dans ladite mémoire de traces (10) , qui est déclenché par une touche numérique (5) affectée à la sélection de cette opération et comporte des phases (41-44, 71-74) pour désigner le compartiment consulté (NCC), initialement à partir du dernier compartiment écrit (NCE), puis selon celle des propositions (TC4-TC6) sélectionnée, et pour adresser en lecture le compartiment consulté (NCC) pour y prélever la trace enregistrée et composer ceux des seconds écrans (E1-E3) affichant ladite trace.

3.  Machine à affranchir selon la revendication 1, comportant en outre au moins un deuxième espace mémoire (9B, 9C) associé à chaque mémoire de l'état de la machine (9A) en constituant ensemble une mémoire de la trace immédiate de l'état de la machine pour le dernier affranchissement et autant de directement précédents que de deuxièmes espaces mémoires, et des troisièmes moyens de commande (6) de gestion en chargement de ladite mémoire de la trace immédiate, caractérisée en ce qu'elle comporte, en outre de quatrièmes moyens de commande (6, 7) de consultation de ladite mémoire de la trace immédiate, et en ce que lesdits quatrièmes moyens de commande comportent ladite mémoire de texte (7) contenant, en outre d'une part, dans ledit premier message (MPO) accessible par la touche menu (M) et définnisant dans ladite suite d'opérations particulières de la machine au moins un autre desdits premiers écrans affecté à une opération, dite de consultation de la trace immédiate de l'état de la machine, sélectionnable par une touche numérique désignée, et contenant, d'autre part un troisième message (MP2) constitué d'une suite de troisièmes écrans (EI1-EI7) visualisables successivement sur l'afficheur lorsque l'opération de consultation de la trace immédiate de l'état de la machine est sélectionnée, avec lesdits troisièmes écrans affichant successivement un rang (a) dans la trace immédiate, la date et l'état correspondants de la machine et une proposition de sélection de l'état antérieur enregistré dans chaque deuxième espace mémoire (9B-9C) pour son affichage.

4.  Machine à affranchir selon l'une des revendications 2 et 3, caractérisée en ce qu'elle comporte en outre, associé à ladite mémoire de traces (10), au moins un troisième espace mémoire (10B) affecté à l'enregistrement de l'identification, dite numéro, du dernier compartiment écrit (NCE) pour chaque premier espace mémoire (10C, 10D), de la date de la dernière écriture (AA/MM/JJ) et du numéro du compartiment consulté (NCC).

5.  Machine à affranchir selon la revendication 4, caractérisé en ce que lesdits seconds moyens de commande comportent, en outre, des moyens (58, 61) pour comparer d'une part le numéro du compartiment consulté (NCC) avec celui du dernier écrit (NCE) et d'autre part le numéro (NCP) du compartiment précédant celui consulté avec celui du dernier écrit (NCE), contenus dans le programme de consultation et inhibant une proposition d'incrément du compartiment consulté et une proposition de décrément du compartiment consulté, respectivement, définies dans au moins un desdits dits deuxièmes écrans (E4-E5).

6.  Machine à affranchir selon l'une des revendications 3 à 5, caractérisée en ce que lesdits premiers moyens de commande comportent ladite mémoire de programme (6) contenant en outre, un programme dit de gestion de traces enregistrées, ayant des phases (32, 33, 34) pour désigner selon une suite le compartiment de chaque premier espace suivant le dernier écrit (NCE) ou le premier (Co) de la suite lorsque le dernier écrit est le dernier (C61) de la suite, et des phases (36, 37) pour commander l'enregistrement de l'état de la machine et de l'horloge calendrier dans le compartiment alors désigné et adressé.

7.  Machine à affranchir selon la revendication 6, caractérisé en ce que lesdits premiers intervalles sont définis à la première mise sous tension quotidienne de la machine pour un premier espace mémoire (10C) de ladite mémoire de traces (10).

8.  Machine à affranchir selon la revendication 7, caractérisé en ce que les premiers intervalles sont définis à date fixe de chaque mois pour un autre premier espace mémoire (10D) de ladite mémoire de traces (10).

**9.** Machine à affranchir selon la revendication 6 , caractérisé en ce que lesdits premiers intervalles sont définis à chaque chargement de nouveau crédit dans ladite machine, pour un premier espace mémoire (10C) de ladite mémoire de traces.

**10.** Machine à affranchir selon l'une des revendication 3 à 9, caractérisée en ce que lesdits quatrièmes moyens comportent en outre, dans la mémoire de programme (6) un programme affecté à l'opération de consultation de la trace immédiate de l'état de la machine.

**11.** Machine à affranchir selon la revendication 10, caractérisé en ce que la mémoire de la trace immédiate (9) de l'état de la machine a ses deuxièmes espaces mémoire (9B, 9C) et la mémoire (9A) de l'état de la machine oprganisés entre eux selon une suite continue et bouclée.

**12.** Machine à affranchir selon la revendication 10, caractérisé en ce que la mémoire de la trace immédiate (9) de l'état de la machine a ses deuxièmes espaces mémoire (9B, 9C) organisés entre eux selon une suite continue et bouclée.

**13.** Machine à affranchir selon l'une des revendications 1 à 4, caractérisé en ce que lesdits seconds moyens de commande comportent une touche spécifique de fonction (T) sur ledit clavier commandant directement la mise de la machine en mode de consultation de la mémoire de traces (10).

**14.** Machine à affranchir selon l'unes des revendications 1 à 4 et 13, caractérisé en ce qu'elle comporte en outre une imprimante alphanumérique (15) couplée au microprocesseur et en ce que ledit clavier comporte une deuxième touche spécifique (I) assurant la mise de ladite machine en mode d'impression, pour imprimer tout ou partie du contenu de ladite mémoire des traces (10).

**15.** Machine à affranchir selon l'une des revendications 1 à 10, caractérisé en ce qu'elle comporte, en outre, une imprimante alphanumérique (15) couplée audit microprocesseur (5) et en ce que l'un (E6) desdits deuxièmes écrans (E1-E7) comporte une proposition d'impression sélectionnable par une touche numérique affectée à cette opération d'impression et désignée avec elle, commandant la mise de la machine en impression de trace enregistrée dans ledit compartiment consulté de la mémoire des traces (10) lorsque ladite proposition d'impression est sélectionnée.

**16.** Machine à affranchir selon la revendication 15, caractérisée en ce qu'elle comporte des moyens programmés de commande d'impression des traces enregistrées dans les compartiments (Co-C61) de ladite mémoire des traces (10C), depuis le compartiment consulté (NCC) jusqu'au dernier compartiment écrit (NCE) pour l'édition automatique d'une fiche.

**17.** Machine à affranchir selon la revendication 16, caractérisée en ce qu'elle comporte, couplés à ladite imprimante, des moyens de codage des traces déjà imprimées commandant leur impression sous forme codée en vue de leur saisie automatique ultérieure.

**18.** Machine à affranchir selon l'une des revendications 16 et 17, caractérisée en ce qu'elle comporte, en outre, associé à ladite mémoire des traces (10) un quatrième espace mémoire (10A) d'enregistrement de paramètres fixes (PF) liés à la machine et son usager, prélevés lors de la commande de ladite imprimante pour leur impression sur ladite fiche pour l'établissement automatique d'une fiche mensuelle de dépôt.

## Claims

**1.** A franking machine providing a historical trail, the machine comprising a microprocessor (5), and connected to said microprocessor: a stamp print head (1); a keyboard (2); a calendar clock (4); a control memory (6, 7); a working memory (8); at least one first non-volatile memory (9A) referred to as the machine state memory for recording the state of the machine meters corresponding to the last franking operation performed; and a second non-volatile memory (10) referred to as the trail memory (10), having at least a first memory space (10C, 10D) organized as a plurality of identical compartments (C0-C61, D0-D11) which are individually addressable by first updating control means (6) for loading said first memory space, said updating means being triggered at time intervals specific to said first memory space for recording data relating to the machine state at the instants concerned in the various compartments thereof, said machine being characterized in that it further includes second control means (10BC, 10BD, 6, 7) for consulting each first memory space, said second control means controlling the addressing of the compartments thereof in order to read the trail in that one of the addressed compartments referred to as consulted compartment (NCC); in that said second control means include a text memory (7) belonging to said control memory and containing firstly a first message (MPO) which is accessible by means of a menu key (M) on said keyboard and which defines a sequence of special operations for the machine, said operations being split into a sequence of first screens capable of being displayed on at least one line comprising a plurality of alphanumeric characters on an alphanumeric display (3) connected to the microprocessor, with at least one of said first screens dedicated to a machine state trail consultation operation which may be selected by means of a digit key of said keyboard for designating said operation, and also containing, for use by a sequence of second screens (E1-E7) successively displayable on the display when the consultation operation has been selected, with some of said second screens (E1-E3) displaying the trail (TC1-TC3) recorded in the consulted compartment (NCC), and with other screens (E4-E6) defining proposals (TC4-TC6) for changing the compartment being consulted (NCC), with each of said proposals being selectable by means of a corresponding key (1-4) designated together with the proposal concerned when the proposal is displayed.

2.  A franking machine according to claim 1, characterized in that second control means further include a program memory (6) belonging to said control memory and containing a program for consulting the trails recorded in said trail memory (10), which program can be triggered by a digit key (5) attributed to selecting said operation, said program comprising stages (41-44, 71-74) for designating the compartment to be consulted (NCC), initially on the basis of the last compartment written to (NCE), and subsequently on the basis of selected proposals (TC4-TC6), and for read addressing the consulted compartment (NCC) in order to read the recorded trail therein and to build those of the second screens (E1-E3) which display said trail.

3.  A franking machine according to claim 1, further including at least one second memory space (9B, 9C) associated with each machine state memory (9A) and together constituting an immediate machine state trail memory for recording the most recent franking operation and as many of the immediately preceding franking operations as there are second memory spaces, and third control means (6) for updating said immediate trail memory, the machine being characterized in that it further includes fourth control means (6, 7) for consulting said immediate trail memory, and in that said fourth control means include said text memory (7) which further contains, within said first message (MP0) accessible by means of the menu key (M) and defining said sequence of special machine operations, at least one further one of said first screens attributed to an operation of consulting the immediate machine state trail, said operation being selectable by depressing a designated digit key, and also containing a third message (MP2) constituted by a sequence of third screens (EI1-EI7) displayable in succession on the display when the operation of consulting the immediate machine state trail has been selected, with said third screens successively displaying a rank (a) within the immediate trail, the date and the corresponding state of the machine, and a proposal to select and display the, or each, earlier state recorded in said second memory space (9B-9C).

4.  A franking machine according to claim 2 or 3, characterized in that it further includes, in association with said trail memory (10), at least one third memory space (10B) for recording the identification, referred to as the number, of the last compartment written to (NCE) in each first memory space (10C, 10D), the date of the last write operation (A/MM/JJ), and the number of the consulted compartment (NCC).

5.  A franking machine according to claim 4, characterized in that second control means further include means (58, 61) for comparing firstly the number of the consulted compartment (NCC) with the number of the last written compartment (NCE), and secondly the number of the compartment preceding the consulted compartment (NCP) with the number of the last written compartment (NCE), said means being contained in the consultation program and serving respectively to inhibit a proposal to increment the consulted compartment or to inhibit a proposal to decrement the consulted compartment, said proposals being defined in at least one of said second screens (E4-E5).

6.  A franking machine according to any one of claims 3 to 5, characterized in that said first control means include said program memory (6) and further contain a record trail update program having stages (32, 33, 34) for designating the next first space compartment following the last written compartment (NCE) in a sequence of said compartments or the first compartment (C0) of the sequence when the last written compartment is the last compartment (C61) in the sequence, and phases (36, 37) for causing the machine state and the calendar clock state to be recorded in the compartment which is then designated and addressed.

7. A franking machine according to claim 6, characterized in that said first intervals are defined for a first memory space (10C) of said trail memory (10) as being constituted by the first occasion each day on which the machine is switched on.

8. A franking machine according to claim 7, characterized in that the first intervals for another first memory space (10b) of said trail memory (10) are defined as being a fixed date in each month.

9. A franking machine according to claim 6, characterized in that the said first intervals are defined for a first memory space (10C) of said trail memory as being each occasion on which new credit is loaded into the machine.

10. A franking machine according to any one of claims 3 to 9, characterized in that said fourth means further include a program in the program memory (6) for the operation of consulting the immediate machine state trail.

11. A franking machine according to claim 10, characterized in that the immediate machine state trail memory (9) has its second memory spaces (9B, 9C) and its machine state memory (9A) organized as a continuous and looped sequence.

12. A franking machine according to claim 10, characterized in that the immediate machine state memory (9) has its second memory spaces (9B, 9C) organized as a continuous looped sequence.

13. A franking machine according to any one of claims 1 to 4, characterized in that said second control means include a specific function key (T) on said keyboard for directly putting the machine into trail memory (10) consultation mode.

14. A franking machine according to claims 1 to 4 and 13, characterized in that it further includes an alphanumeric printer (15) coupled to the microprocessor, and in that said keyboard includes a second special key (I) for putting said machine into print mode to print out at least a portion of the contents of said trail memory (10).

15. A franking machine according to any one of claims 1 to 10, characterized in that it further includes an alphanumeric printer (15) coupled to said microprocessor (5), and in that one (E6) of said second screens (E1-E7) includes a print proposal selectable by depressing a digit key associated with said print operation and designated in conjunction therewith, thereby putting the machine into print mode to print out the trail recorded in said consulted compartment of the trail memory (10) when said print proposal is selected.

16. A franking machine according to claim 15, characterized in that it includes programmed print control means for printing the trails recorded in the compartments (C0-C61) of said trail memory (10C) starting from the consulted compartment (NCC) and continuing to the last written compartment (NCE) in order to automatically print out a sheet.

17. A franking machine according to claim 16, characterized in that it includes means coupled to said printer for encoding the trails already printed out and causing them to be printed in an encoded form for the purpose of subsequent automatic acquisition thereof.

18. A franking machine according to claims 16 or 17, characterized in that it further includes a fourth memory space (10A) associated with said trail memory and serving for recording fixed parameters (PF) related to the machine and to its user, said parameters being read while said printer is in use in order to cause them to be printed on said sheet, thereby automatically establishing a monthly filing sheet.

**Patentansprüche**

1. Frankiermaschine, die die Verwaltung der Operationsabläufe mittels eines Mikroprozessors (5) erlaubt, und, angeschlossen an diesen, einen Freistempeldruckkopf (1), eine Tastatur (2) mit Tasten, eine Kalenderuhr (4), einen Steuerspeicher (6, 7), einen Arbeitsspeicher (8), mindestens einen nichtflüchtigen Speicher (9A), Maschinenstandsspeicher genannt, der den Stand der Zähler der Maschine nach der letzten durchgeführten Freistempelung registriert, und einen zweiten nichtflüchtigen Speicher (10), Betriebsablaufspeicher genannt, aufweist, der mindestens einen ersten Speicherbereich (10C, 10D) besitzt, der in eine Vielzahl identischer Felder (C0-C61, D0-D11) unterteilt ist, die individuell durch erste Ladesteuereinrichtungen (6) jedes ersten Speicherbereichs adressierbar sind und in für den ersten Speicherbereich geeigneten Zeitintervallen ausgelöst werden, um in die verschiedenen Felder Daten in Bezug auf den Zählstand der Maschine in den betrachteten Zeitpunkten einzuspeichern, dadurch gekennzeichnet, daß die Maschine weiter zweite Steuereinrichtungen (10BC, 10BD, 6, 7) zur Konsultation jedes ersten Speicherbereichs aufweist, die die Adressierung seiner Felder zum Lesen der im adressierten Feld, Konsultationsfeld (NCC) genannt, gespeicherten Betriebsabläufe, und daß die zweiten Steuereinrichtungen einen Textspeicher (7) aufweisen, der zum genannten Steuerspeicher gehört und zum einen eine erste Nachricht (MPO) enthält, die über eine Menütaste (M) der Tastatur zugänglich ist und eine Folge von besonderen Operationen der Maschine definiert, die in Form einer Folge von ersten Bildern, welche in mindestens einer Zeile mehrere alphanumerische Zeichen enthalten, auf einem alphanumerischen, mit dem Mikroprozessor verbundenen Anzeigegerät (3) sichtbar gemacht werden können, wobei mindestens eines der ersten Bilder, das einer Operation, genannt Betriebsablaufbefragung des Maschinenstands, zugewiesen ist, durch eine die Operation bezeichnende Zifferntaste der Tastatur anwählbar ist, und der zum anderen für die Operation der Betriebsablaufbefragung eine zweite Nachricht (MP1) enthält, die aus einer Folge von zweiten Bildern (E1-E7) besteht, die beim Anwählen der Betriebsablaufbefragung auf dem Anzeigegerät nacheinander sichtbar gemacht werden können, wobei einige der zweiten Bilder (E1-E3) den im konsultierten Feld (NCCV) gespeicherten Betriebsablauf (TC1-TC3) anzeigen und andere Bilder (E4-E6) Vorschläge (TC4-TC6) zur Änderung des konsultierten Felds (NCC) definieren, und wobei jeder Vorschlag durch eine spezifische Taste (1-4) anwählbar ist, die bei der Anzeige mit dem betreffenden Vorschlag bezeichnet wird.

2. Frankiermaschine nach Anspruch 1, dadurch gekennzeichnet, daß die zweiten Steuereinrichtungen weiter einen Programmspeicher (6) aufweisen, der zum Steuerspeicher gehört und ein Programm, genannt Konsultationsprogramm der Betriebsabläufe, enthält, die im Betriebsablaufspeicher (10) gespeichert sind, wobei das Programm durch eine dem Anwählen dieser Operation zugewiesene Zifferntaste (5) ausgelöst wird und Phasen (41-44, 71-74) zur Bezeichnung des konsultierten Feldes (NCC), anfänglich beginnend mit dem zuletzt beschriebenen Feld (NCE), dann gemäß dem angewählten Vorschlag (TC4-TC6), sowie zum Leseadressieren des befragten Fachs (NCC) aufweist, um dort den gespeicherten Betriebsablauf auszulesen und jene der zweiten Bilder (E1-E3) aufzubauen, die den Ablauf anzeigen.

3. Frankiermaschine nach Anspruch 1, die weiter mindestens einen zweiten Speicherbereich (9B, 9C), der jedem Maschinenstandsspeicher (9A) unter Bildung eines Speichers für den unmittelbaren Betriebsablauf des Maschinenstands für die letzte Freistempelung und für ebensoviele vorhergehende Daten, wie zweite Speicherbereiche vorhanden sind, zugeordnet ist, sowie dritte Ladesteuereinrichtungen (6) für den Speicher der unmittelbaren Abläufe aufweist, dadurch gekennzeichnet, daß die Maschine weiter vierte Steuereinrichtungen (6, 7) zur Konsultation des Speichers bezüglich des unmittelbaren Betriebsablaufs aufweist, und daß die vierten Steuereinrichtungen den genannten Textspeicher (7) umfassen, der weiter zum einen innerhalb der ersten Nachricht (MP0), die durch die Menütaste (M) zugänglich ist und in der genannten Folge der besonderen Operationen der Maschine mindestens ein weiteres, der Konsultationsoperation des unmittelbaren Betriebsablaufs des Maschinenstands zugewiesenes erstes Bild definiert, das durch eine bezeichnete Zifferntaste anwählbar ist, und zum anderen eine dritten Nachricht (MP2) enthält, die aus einer Folge dritter Bilder (EI1-EI7) besteht, welche bei Anwählen der Konsultationsoperation des unmittelbaren Betriebsablaufs des Maschinenstands nacheinander auf dem Anzeigegerät sichtbar gemacht werden kann, wobei die dritten Bilder nacheinander eine Ordnungszahl (a) im Betriebsablauf, das Kalenderdatum und den Maschinenstand und einen Vorschlag zum Anwählen des vorhergehenden Stands anzeigen, der in jedem zweiten Speicherbereich (9B-9C) zu Anzeigezwecken gespeichert ist.

**4.** Frankiermaschine nach Anspruch 2 oder 3, dadurch gekennzeichnet, daß sie weiter mindestens einen dritten Speicherbereich (10B) aufweist, der dem Betriebsablaufspeicher (10) zugeordnet ist und zur Speicherung der Identifikation, genannt Identifikationsnummer, des letzten beschriebenen Fachs (NCE) jedes ersten Speicherbereichs (10C, 10D), des Kalenderdatums der letzten Einschreibung (AA/MM/JJ) und der Nummer des konsultierten Fachs (NCC) dient.

**5.** Frankiermaschine nach Anspruch 4, dadurch gekennzeichnet, daß die zweiten Steuereinrichtungen weiter Einrichtungen (58, 61) zum Vergleichen der Nummer des konsultierten Fachs (NCC) mit derjenigen des zuletzt beschriebenen Fachs (NCE), einerseits, und der Nummer des vorhergehenden Fachs (NCP) mit derjenigen des zuletzt beschriebenen Fachs (NCE) andererseits aufweisen, die im Konsultationsprogramm enthalten sind und jeweils einen Inkrementierungsvorschlag des konsultierten Fachs sowie einen Dekrementierungsvorschlag des befragten Felds unterbinden, die in mindestens einem der zweiten Bilder (E4-E5) definiert sind.

**6.** Frankiermaschine nach einem der Ansprüche 3 bis 5, dadurch gekennzeichnet, daß die ersten Steuereinrichtungen den genannten Programmspeicher (6) umfassen, der weiter ein Programm, genannt Verwaltungsprogramm der gespeicherten Betriebsabläufe, enthält, das Phasen (32, 33, 34) aufweist, um entsprechend einer Folge das Fach jedes ersten Bereichs zu bezeichnen, das dem letzten beschriebenen Fach (NCE) folgt, oder das erste Fach (C0) der Folge, wenn das zuletzt beschriebene Fach das letzte Feld (C61) der Folge ist, und das Phasen (36, 37) zur Steuerung der Speicherung des Maschinenstands und der Datumsuhrzeit im dann bezeichneten und adressierten Fach aufweist.

**7.** Frankiermaschine nach Anspruch 6, dadurch gekennzeichnet, daß die ersten Intervalle für einen ersten Speicherbereich (10C) des Betriebsablaufspeichers (10) mit dem ersten täglichen Einschalten der Maschine definiert werden.

**8.** Frankiermaschine nach Anspruch 7, dadurch gekennzeichnet, daß die ersten Intervalle für einen weiteren ersten Speicherbereich (10D) des Betriebsablaufspeichers (10) unter einem festen Datum jedes Monats definiert werden.

**9.** Frankiermaschine nach Anspruch 6, dadurch gekennzeichnet, daß die ersten Intervalle für einen ersten Speicherbereich (10C) des Betriebsablaufspeichers bei jedem Laden der Maschine mit neuem Guthaben definiert werden.

**10.** Frankiermaschine nach einem der Ansprüche 3 bis 9, dadurch gekennzeichnet, daß die vierten Einrichtungen im Programmspeicher (6) weiter ein Programm aufweisen, das der Konsultationsoperation des unmittelbaren Betriebsablaufs des Maschinenstandes dient.

**11.** Frankiermaschine nach Anspruch 10, dadurch gekennzeichnet, daß im Speicher des unmittelbaren Betriebsablaufs des Maschinenstandes die zweiten Speicherbereiche (9B, 9C) und der Speicher (9A) des Maschinenstandes entsprechend einer durchgehenden und schleifenförmigen Folge angeordnet sind.

**12.** Frankiermaschine nach Anspruch 10, dadurch gekennzeichnet, daß im Speicher (9) des unmittelbaren Betriebsablaufs des Maschinenstandes die zweiten Speicherbereiche (9B, 9C) entsprechend einer durchgehenden und schleifenförmigen Folge angeordnet sind.

**13.** Frankiermaschine nach einem der Ansprüche 1 bis 4, dadurch gekennzeichnet, daß die zweiten Steuereinrichtungen auf der Tastatur eine spezifische Funktionstaste (T) aufweisen, die das Einstellen der Maschine auf den Modus zur Konsultation des Betriebsablaufspeichers (10) direkt ansteuert.

**14.** Frankiermaschine nach einem der Ansprüche 1 bis 4 und 13, dadurch gekennzeichnet, daß sie weiter einen an den Mikroprozessor (5) angeschlossenen alphanumerischen Drucker (15) umfaßt, und daß die Tastatur eine zweite spezifische Taste (I) aufweist, die das Einstellen der Maschine auf Druckbetrieb bewirkt, um den Inhalt des Betriebsablaufspeichers (10) ganz oder teilweise auszudrucken.

**15.** Frankiermaschine nach einem der Ansprüche 1 bis 10, dadurch gekennzeichnet, daß sie weiter einen an den Mikroprozessor (5) angeschlossenen alphanumerischen Drucker (15) umfaßt, und daß eines der zweiten Bilder (E1-E7) einen Druckvorschlag aufweist, der durch eine dieser Druckoperation zugewiesene und von ihr bezeichnete Zifferntaste anwählbar ist und das Einstellen der Maschine auf das Drucken der Betriebsabläufe bewirkt, die im konsultierten Fach des Speichers (10) der Betriebsabläufe gespeichert sind, wenn der Druckvorschlag gewählt wird.

16. Frankiermaschine nach Anspruch 15, dadurch gekennzeichnet, daß sie programmierte Mittel zur Steuerung des Druckens der in den Feldern (C0-C61) des Betriebsablaufspeichers (10C) gespeicherten Betriebsabläufe vom konsultierten Fach (NCC) bis zum letzten beschriebenen Feld (NCE) zur automatischen Ausgabe eines Datenblatts aufweist.

17. Frankiermaschine nach Anspruch 16, dadurch gekennzeichnet, daß sie Einrichtungen zum Kodieren der bereits gedruckten Betriebsabläufe aufweist, die an den Drucker angeschlossen sind und den Druck der Daten in kodierter Form für deren spätere automatische Erfassung steuern.

18. Frankiermaschine nach Anspruch 16 oder 17, dadurch gekennzeichnet, daß sie weiter einen vierten Speicherbereich (10A) zur Speicherung fester, an die Maschine und ihre Benutzer gebundener Parameter (PF) aufweist, wobei der Bereich dem Speicher (10) der Betriebsabläufe zugeordnet ist und die Parameter beim Steuern des Druckers zum Abdrucken der Parameter auf dem Blatt zur automatischen Erstellung eines monatlichen Ablagedatenblatts entnommen werden.

# FIG.1

# FIG.2

# FIG.3

# FIG.4

10

| |
|---|
| **PF** |

10A

| AA/MM/JJ |
|---|
| NCE |
| NCC |
| NCP |

10BC

10B

| RM AA MM |
|---|
| NDE |
| NDC |
| HDP |

10BD

| AA/MM/JJ |
|---|
| CA |

CO

10C

C61

| RM |
|---|
| AA/MM |
| CA |

DO

10D

D1

D11

# FIG.5

20 — ( MN )

21 — | 50 → A |

22 — | A-1 → A |

23 — | (A) → (A+25) |

24 — < A = 0 > 0

25 — | DD/CA/CD/CT/CC → (A0_A24) |

26 — ( FP )

# FIG.6

30 — ( V )

31 — < AA/MM/JJ = (3) > 1

32 — < NCE = 61 > 1

34 — | NCE+1 → NCE |     33 — | 0 → NCE |

35 — | C |

36 — | AA/MM/JJ |

37 — | CA |

38 — ( FP )

# FIG.7

| | |
|---|---|
| E1 — | TC1 |
| E2 — | TC2 |
| | TC3 |
| | TC4 |
| | TC5 |
| | TC6 |
| E7 — | TC7 |

7

EP 0 285 956 B1

# FIG.8

FIG.9

# FIG.10